(19) **Europäisches Patentamt / European Patent Office / Office européen des brevets**

(11) **EP 1 975 907 A1**

(12) **EUROPEAN PATENT APPLICATION**
published in accordance with Art. 158(3) EPC

(43) Date of publication:
**01.10.2008 Bulletin 2008/40**

(51) Int Cl.:
**G09C 1/00** (2006.01)      **H04L 9/30** (2006.01)

(21) Application number: **07706355.0**

(22) Date of filing: **04.01.2007**

(86) International application number:
**PCT/JP2007/050008**

(87) International publication number:
**WO 2007/080825 (19.07.2007 Gazette 2007/29)**

(84) Designated Contracting States:
**DE FR GB**

(30) Priority: **16.01.2006 JP 2006007104**

(71) Applicant: **Sony Corporation**
**Minato-ku**
**Tokyo (JP)**

(72) Inventors:
• **KATAGI, Masanobu**
**Tokyo (JP)**

• **KITAMURA, Izuru**
**Tokyo (JP)**
• **AKISHITA, Toru**
**Tokyo (JP)**

(74) Representative: **Thévenet, Jean-Bruno et al**
**Cabinet Beau de Loménie**
**158, rue de l'Université**
**75340 Paris Cédex 07 (FR)**

(54) **ENCRYPTION PROCESSING DEVICE, ENCRYPTION PROCESSING METHOD, AND COMPUTER PROGRAM**

(57)    An apparatus and method for performing a high-speed operation in a hyperelliptic curve cryptography process are provided. If a standard divisor having a weight equal to a genus g in the hyperelliptic curve cryptography of genus g is a target divisor of scalar multiplication, a determination as to whether the standard divisor is divisible into a theta divisor defined as a divisor having a weight less than the genus g is determined, and if the standard divisor is divisible, the theta divisor is generated by dividing the standard divisor, and a scalar multiplication executing block performs the scalar multiplication using the theta divisor. With this arrangement, the scalar multiplication is performed at high speed with an amount of calculation reduced, and a high-speed encryption processing operation is thus performed.

FIG. 2

**Description**

Technical Field

The present invention relates to an encryption processing apparatus, an encryption processing method, and a computer program. More in detail, the present invention relates to an encryption processing apparatus, an encryption processing method, and a computer program for performing a high-speed scalar multiplication calculation in the hyperelliptic curve cryptography.

Background Art

Currently, maintaining security in communications becomes an important issue as network communications and electronic transactions advance. One method of maintaining security is cryptography and communications based on a variety of encryption techniques are performed.

For example, in one currently available system performing an authentication process, or encrypting and decrypting transmitted and received data, an encryption processing module is embedded in a compact device such as an IC card, data transmission and reception are performed between the IC card and a reader and writer as a data reading and writing device.

More and more IC cards performing an encryption process are used at a variety of gates such as ticket gates of stations, or shopping malls, and there is a growing demand for compact design and high-speed processing on such an IC card.

Encryption methods are mainly divided into a common key method and a public key method. The common key method is also referred to a symmetric cryptography, and a common key is shared by a transmitter side and a receiver side. One of the typical common key methods is DES (Data Encryption Standard). The feature of a DES algorithm is that an encryption process and a decryption process are performed using a substantially identical algorithm.

In contrast to the common key method, a transmitter side and a receive side use different keys in the public key method or an asymmetric cryptography. Unlike the common key encryption method using the key common to the encryption process and the decryption process, the public key encryption method allows a particular person to hold a secret key to be kept secret, and has a key management advantage over the common key encryption method. However, the public key encryption method is slower in a data processing speed than the common key encryption method, and generally finds many applications that handle a small amount of data, such as delivery of a secret key or digital signature. Typical public key encryption methods include RSA (Rivest-Shamir-Adleman) encryption and elliptic curve cryptography (ECC).

Elliptic curve cryptography uses an elliptic curve $y^2=x^3+ax+b(4a^3+27b^2\neq0)$ on a prime field or an elliptic curve $y^2+xy=x_3+ax^2+b(b\neq0)$ on an extension field of 2. A set containing these points on the curves with an infinity point (O) added forms a finite group in an addition system, and the infinity point (O) serves as an identity element. The addition system on the finite group is denoted by +. The addition of two different points P and Q on the finite group P+Q is referred to as the "addition of points," and the addition of the point P and the point P, P+P=2P, is referred to as the "addition of doubling points." The addition of the point P by k times, P+P+...+P=kP, is referred to as the "scalar multiplication of the point."

The scalar multiplication of the point is known to be composed of the addition of the point and the doubling of the point. The addition of the point, the doubling operation of the point, and the scalar multiplication of the point on the elliptic curve on the prime field, the affine coordinates system (x,y) on the elliptic curve on the extension field of 2, and the projective coordinates (X,Y,Z) are described in IEEE PI363/D13 Standard Specifications for Public Key Cryptography.

One of generalized methods of elliptic curve cryptography is hyperelliptic curve cryptography (HECC: Hyper Elliptic Curve Cryptography) proposed by Koblitz and Cantor. The hyperelliptic curve cryptography is described in Non-patent Document 1 and Non-patent Document 2.

A finite field is represented by Fq, where $q=p^n$, and p is a prime factor. In the elliptic curve cryptography (ECC), let P represent a point on the elliptic curve defined on the finite field Fq and let Q represent points kP as scalar multiplication results ($k\in Z$), and a problem of determining k from Q reduces to a discrete logarithm problem. On the other hand, let $D_1$ represent a factor (divisor) as a formal sum of points in the hyperelliptic curve cryptography (HECC), and let $D_2$ represent a divisor defined by a scalar multiplication $kD_1$, and a problem of determining $D_2$ from k reduces to a discrete logarithm problem on a Jacobian variety in the hyperelliptic curve cryptography, and difficulty arises in mathematical solution to the discrete logarithm problem. It is known that the hyperelliptic curve cryptography (HECC) presents a mathematical encryption difficulty, and the hyperelliptic curve cryptography is thus expected to be effective as an encryption method of public key encryption.

In the hyperelliptic curve, a value characteristic of the curve is a genus g. A hyperelliptic curve C of the genus g defined on the finite field Fq is defined by the following equation

$$y^2+h(x)y=f(x)$$

where $h(x)$, $f(x) \in Fq[x]$, and $f(x)$ are, at most, a polynomial of an order g ($h=0$ if p is an odd prime), and $f(x)$ is a monic polynomial of an order $2g+1$.

If an arithmetic size (bit length) of a definition field of the hyperelliptic curve cryptography is assumed to have the same security level as the security level of the elliptic curve cryptography, the Hasse principle shows that the arithmetic size of the hyperelliptic curve cryptography becomes 1/g times the arithmetic size of the elliptic curve cryptography. A small arithmetic size provides an implementation advantage, which is one of the advantages of the hyperelliptic curve cryptography.

Next, the basics of the hyperelliptic curve cryptography are described. As previously discussed, let $D_1$ represent a factor (divisor) as a formal sum of points in the hyperelliptic curve cryptography, and let $D_2$ represent a divisor defined by a scalar multiplication $kD_1$, and a problem of determining $D_2$ from k is used as public key cryptography as a discrete logarithm problem on a Jacobian variety in the hyperelliptic curve cryptography.

Here, the factor (divisor) is the formal sum of rational points, and written in the following format.

[Eq. 1]

$$D = \sum_i m_i P_i$$

A semi reduced divisor is written in the following format.

[Eq. 2]

$$D = \sum_i m_i P_i - (\sum_i m_i) P_\infty, \quad m_i \geq 0$$

Here, $P_i=(x_i, y_i)$ and $Pi \neq Pj$ if $i \neq j$.

Also, $\Sigma m_i$ is referred to as weight. Furthermore, a semi reduced divisor having a weight smaller than the genus g is referred to as a reduced divisor.

Any semi reduced divisor D in the hyperelliptic curve cryptography may be written as $D=(U,V)$ using $V \in Fq[x]$. This is called Mumford expression.

[Eq. 3]

$$U = \prod (x - x_i)^{m_i}$$

$$V(x_i) = y_i$$

$$V(x)^2 + V(x)h(x) - f(x) \equiv 0 \mod U(x), \quad \deg V < \deg U$$

Using the Mumford expression, any reduced divisor of the genus 2 can be represented as a set of polynomials of the second order or lower having as a coefficient an element on the finite field Fq, namely,

$$(U,V)=(x^2+U_1 x+U_0, v_1 x+v_0).$$

Using the Munford expression, any reduced divisor D of the genus 3 is written as a set of polynomials of an order equal to or lower than a second order, having as a coefficient an element on the finite field Fq, namely,

$$(U,V)=(x^3+u_1x^2+u_0,v_2x^2+v_1x+v_0)$$

The "divisor" means hereinafter a reduced divisor unless otherwise noted.

The weight of the divisor is equal to or lower than the genus (g) in the hyperelliptic curve cryptography of the genus g. In the description of the specification that follows, a divisor having the weight equal to the genus g is referred to a standard divisor and a divisor having the weight smaller than the genus (g) is referred to as a theta divisor,

For example, in the case of the genus 2, the theta divisor indicates a divisor having a weight 1,

in the case of the genus 3,

the theta divisor indicates divisors having weights 1 and 2.

More specifically, the Mumford expression is listed below.

(1) theta divisor having the genus 2: $(U,V)=(x+u,v)$

(2) theta divisor having the genus 3 (weight 1): $(U,V)=(x+u_0,v_0)$

(3) theta divisor having the genus 3 (weight 2): $(U,V)=(x^2+u_1x+U_0,v_1+v_0)$

Next, the scalar multiplication of the divisor used in the hyperelliptic curve cryptography is described. The scalar multiplication of the divisor is calculated using a combination of an addition of divisors, called an addition algorithm, and a doubling calculation. In the discussion that follows, main additional algorithms are described.

A practical algorithm proposed first is the algorithm proposed by Cantor. This algorithm is described in the Non-patent Document 1 and the Non-patent Document 2. The algorithm is applicable to the divisor on the hyperelliptic curve of any type, but the disadvantage of the Cantor algorithm is that the algorithm is complex and needs a large amount of calculation in comparison with the elliptic curve.

Harley has proposed an algorithm with a smaller amount of calculation, in which the divisors are divided according to weight with the algorithm of Cantor's limited to the hyperelliptic curve cryptography of the genus 3 and the divisor is optimized in each case (Non-patent Document 3 and Non-patent Document 4). This algorithm is called Harley algorithm or Explicit Formulae, and extension of this algorithm (curve of the genus 3, the definition field and the coordinates system) has been actively studied (Non-patent Document 5).

Since case classification is performed according to the weight of an input divisor in the Harley algorithm, calculation cost on the finite field becomes different depending on whether the input is the standard divisor or the theta divisor. As described above, the theta divisor is smaller in weight than the standard divisor. More specifically, since the order of the polynomial in the Mumford expression of the divisor, i.e., the weight is lower, the calculation costs of the addition and the doubling calculation become lower (Non-patent Document 8).

Here, let [MFCADD] define the addition of all the standard divisors,

and [TADD] define the addition of the standard divisor and the theta divisor,

and if the definition field is $F(2^n)$ in the hyperelliptic curve cryptography of the genus 3,

the calculation cost of the addition [MFCADD] of the standard divisors becomes I+25M, the addition [TADD] of the standard divisor and the theta divisor becomes I+11M, and TADD is higher in speed by 14 M (Non-patent Document 8). Here, I and M represent an inverse element calculation and multiplication on the finite field $F(2^n)$, I+25M means that one inverse element calculation and 25 multiplications are needed, and I+11M means that one inverse element calculation and 11 multiplications are needed.

A 1/2 time multiplication (halving) of the rational points has been proposed in the hyperelliptic curve cryptography. When the scalar multiplication of the rational points is calculated, the addition and the halving calculation, instead of the addition and the doubling calculation, are used in a disclosed process. The halving calculation of the hyperelliptic curve cryptography is performed generally at a faster speed than the doubling calculation, and as a result, the scalar multiplication using the halving calculation becomes fast.

Similarly, in the hyperelliptic curve cryptography, the scalar multiplication of the divisor may be calculated using the 1/2 time multiplication (halving calculation) instead of using the doubling calculation. The 1/2 time multiplication (halving calculation) algorithm has been originally proposed in the hyperelliptic curve cryptography having the definition field of $F(2^n)$ (Non-patent Document 7), but today, an arrangement of applying the 1/2 time multiplication (having calculation) algorithm to the hyperelliptic curve cryptography of the genus 2 and the finite field $F(2^n)$ has been proposed (Non-patent Document 10).

The scalar multiplication of the divisor in the hyperelliptic curve cryptography is described below.

(a) Binary method

First, an arithmetic algorithm of a basic binary as an algorithm of the scalar multiplication is described.

(1) The scalar multiplication of the divisors is calculated using a combination of a hyperelliptic addition and a hyperelliptic doubling operation, A binary representation of a scalar value:d as a multiplier applied to the scalar multiplication (D=dD) with respect to the divisor D is

$$d=(d_{n-1}, \ldots, d_0)$$

where $d_{n-1}=1$, $d_{n-2}, ..., 0 = 1$ or 0.

(2) The binary method is characterized in that each bit D is doubled starting with the upper bit thereof, and in that if $d_i=1$, base points are added. Algorithm 1 of the binary (left-to-right) method is described below.

[Eq. 4]

Algorithm 1  binary(left-to-right) calculation

$Input \quad D_0$

$Output \quad D = dD_0$

$D \leftarrow D_0$

$for \; i \; from \; n-2 \; to \; 0$

{

$\quad D \leftarrow [2]D \quad // \text{Double } MFCDBL$

$\quad if \; d_i = 1 \; then \; D \leftarrow D + D_0 \quad // \text{Add } MFCADD$

}

$return \quad D$

(b) Side Channel Attack and double-and-always method

A method of knowing secret information using a defect in the implementation of an encryption technique is referred to as side channel attack (SCA). Known as SCA are Timing Attack (TA) for attacking using a process time of a calculation correlated to the secret information (Non-patent Document 11) and power attack (Non-patent Document 12), such as Simple Power Analysis (SPA) or Differential Power Analysis (DPA), for attacking using a correlation with secret information and power consumption.

The SPA is an implementation attack that clarifies secret information by directly measuring a waveform of power consumed in the calculation depending on bit information of a secret key, In order to contain the SPA in the algorithm, the algorithm must be free from any correlation with the bit information of the secret key and the power waveform (TA robustness being a calculation time). The double-and-add-always technique (Non-patent Document 13) is available as one of remedial steps to TA and SPA proposed in the elliptic curve cryptography (ECC) and the hyperelliptic curve cryptography (HECC). Unlike in the binary method, in this algorithm, Dummy addition is always performed so that the arithmetic time and the power waveform may not be different from bit value $d_i$ to bit value $d_i$,

[Eq. 5]

Algorithm 2 double-and-add-always calculation

$$
\begin{aligned}
&Input \quad D_0 \\
&Output \quad D = dD_0 \\
\hline
&D[0] \leftarrow D_0 \\
&for \; i \; from \; n-2 \; to \; 0 \\
&\quad \{ \\
&\quad\quad D[0] \leftarrow 2D[0] \quad // \; Double \; MFCDBL \\
&\quad\quad D[1] \leftarrow D[0] + D_0 \quad // \; Add \; MFCADD \\
&\quad\quad D[0] \leftarrow D[d_i] \\
&\quad \} \\
&return \quad D[0]
\end{aligned}
$$

(c) Simultaneous calculation

It is known that the calculation of two scalar multiplication kP+lQ can be efficiently performed using the following simultaneous calculation technique rather than calculating kP and lQ separately (Non-patent Document 14). Let $(k_{n-1},.....,k_0)$ and $(l_{n-1},......,l_0)$ represent binary expansions of k and l, and the simultaneous calculation becomes as described below.

[Eq. 6]

Algorithm 3 Simultaneous multiplication

$$
\begin{aligned}
&Input \quad k,P,l,Q \\
&Output \quad T = kP + lQ \\
\hline
&Compute \quad P+Q \\
&T \leftarrow k_{n-1}P + l_{n-1}Q \\
&for \; i \; from \; n-2 \; to \; 0 \\
&\{ \\
&\quad T \leftarrow 2T \\
&\quad if \; (k_i, l_i) \neq (0,0) \; then \; T \leftarrow T + (k_i P + l_i Q) \\
&\} \\
&return \quad T
\end{aligned}
$$

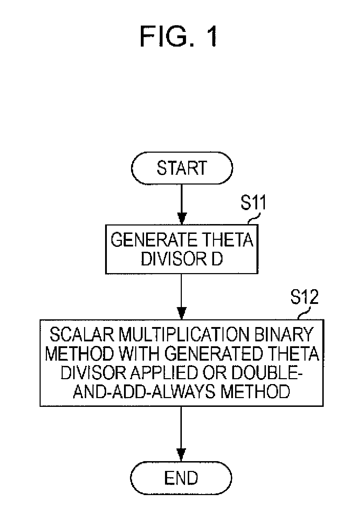

Fig. 1 illustrates a known art of a calculation technique of the scalar multiplication of the divisors using the previously discussed theta divisor, namely, the divisor having the weight smaller than the genus (g) intended to achieve a high-speed scalar multiplication of the theta divisor;

The calculation method of the scalar multiplication of the divisors based on the theta divisor includes two steps. The two steps include first a step of generating the theta divisor as a base point (S11) and then a step of executing the scalar multiplication using the theta divisor (S12).

Most of the divisors used in the hyperelliptic curve cryptography are standard divisors having weight equal to the genus g and having g (Non-patent Document 6). Therefore, if a divisor is randomly generated, the probability of becoming a theta divisor is O (1/q) where q represents the number of elements on the finite field. For example, in the case of the genus 2, q becomes as large as $2^{80}$ or so in the applications of encryption, and if a divisor is randomly selected, the probability of becoming the theta divisor is extremely small. But in the case of the scalar multiplication of base points at fixed points, a theta divisor can be intentionally generated. A method of generating the theta divisor is described below as Algorithm 4.

[Algorithm 4]

1. $g_0$ elements ($1 \leq g_0 < g$) are randomly selected on the definition field Fq in order to generate points $P_i$ ($i=1, ..., g_0$) on $g_0$ hyperelliptic curves. Let $x_i$ ($i=1...g_0$) represent each randomly selected element, and y coordinate corresponding to $x_i$ is determined so that the element is placed on the hyperelliptic curve next.

2. Let $D_0=(U(x),V(x))$ represent the divisor of the base point.

(a) $U(x)=(x-x_1)(x-x_2)...(x-x_{g0})$
(b) Coefficient $v_i$ of $V(x)=v_{g0-1}x^{g0-1}+V_{g0-2}x^{g0-2}+...+v_0$ is determined. For example, if all $P_i$ are different from each other, $v_i$ is determined using simultaneous equations $V(x_i)=y_i(i=1...g_0)$.

For example, by setting the theta divisor generated using the above-described Algorithm 4 as a base point, the double-and-always method as the scalar multiplication having SPA robustness is performed through the following Algorithm 5.

[Eq. 7]

$$
\begin{array}{l}
\hline
\qquad\qquad \text{Algorithm 5} \\
\hline
Input \quad d \quad (D_0 \text{ fixed value}) \\
\hline
Output \quad D = dD_0 \\
\hline
D[0] \leftarrow D_0 \quad \text{// Set } theta \text{ factor} \\
for\ i\ from\ l-2\ to\ 0 \\
\qquad \{ \\
\qquad D[0] \leftarrow 2D[0] \quad \text{// Double } MFCDBL \\
\qquad D[1] \leftarrow D[0] + D_0 \quad \text{// Add to } theta \text{ factor } TADD \\
\qquad D[0] \leftarrow D[d_i] \\
\qquad \} \\
return\ D[0] \\
\hline
\end{array}
$$

As previously discussed, since the addition of the theta divisor and the standard divisor is smaller in amount of calculation than the addition of all the standard divisors, the scalar multiplication can be calculated at high speed (Patent Document 1 and Non-patent Document 8).

To calculate the scalar multiplication at high speed, selection of the theta divisor is effective. However, the scalar multiplication of a fixed divisor or the scalar multiplication of a random divisor may be used depending on the application of the scalar multiplication in the hyperelliptic curve cryptography. The high-speed operation using the theta divisor results in an extremely high speed in comparison with the scalar multiplication of the standard divisor, but there is a problem that the high-speed operation can be performed using a selection divisor as the theta divisor in the scalar multiplication of the fixed point where the divisor is selected beforehand and prepared, while the high-speed operation cannot be performed because of an increase in the possibility of applying the standard divisor if selection of any divisor is required. If software implementation is considered in an environment where no memory limitation is applied, a high-speed technique using a window method is applicable in the method where the standard divisor is used as a base point. On the other hand, if the theta divisor is used as the base point, the window method is applicable only when a window size is small (Non-patent Document 9). In an environment where sufficient memory is available, the method of using the standard divisor has more advantage than the method of using the theta divisor.

Patent Document 1: Japanese Unexamined Patent Application Publication No. 2005-258228
Non-patent Document 1: N. Koblitz. Hyperelliptic curve cryptosystems. J. Cryptology, vol. 1, No, 3, pp.139-150, 1989.
Non-patent Document 2: D.G. Cantor. Computing in the Jacobian of hyperelliptic curve. Math. Comp., Vol. 48, No. 177, pp. 95-101, 1987.
Non-patent Document 3: R. Harley. Adding. text. http://crystal.inria.fr/~Harley/hyper/,2000.
Non-patent Document 4: R. Harley, Doubling.c. http://crystal.inria.fr/~Harley/hyper/,2000.

Non-patent Document 5: H. Cohen and G. Frey. Handbook of Elliptic and Hyperelliptic Curve Cryptography. Chapman & Hall/CRC, 2005.

Non-patent Document 6: N. Nagao. Improving group law algorithms for Jacobians of hyperelliptic curves. ANTS-IV, LNCS 1838, pp. 439-448, Springer-Verlag, 2000.

Non-patent Document 7: E. Knudsen. Elliptic Scalar Multiplication Using Point Halving. ASIAC RYPTO 199, LNCS 1716, pp. 135-149, Springer-Verlag, 1999.

Non-patent Document 8: M. Katagi, I. Kitamura, T. Akishita, and T. Takagi, "Novel Efficient Implementations of Hyperelliptic Curve Cryptosystems Using Degenerate Divisors", WISA 2004, LNCS 3325, pp. 345-359, Springer-Verlag 2004.

Non-patent Document 9: M. Katagi, T.Akishita, I.Kitamura, and T. Takagi, "Some Improved Algorithms for Hyperelliptic Curve Cryptosystems Using Degenerate Divisors", ICISC 2044, LNCS 3506, pp. 296-312, Springer-Verlag 2004.

Non-patent Document 10: I. Kitamura, M. Katagi, and T. Takagi, A Complete Divisor Class Halving Algorithm for Hyperelliptic Curve Cryptosystems of Genus Two. ACISP 2005, LNCS 3574, pp. 146-157, 2005.

Non-patent Document 11: C. Kocher, Timing Attacks on Implementations of Diffie-Hellman, RSA, DSS, and Other Systems, CRYPTO 196, LNCS 1109, pp. 104-113, 1996.

Non-patent Document 12: C. Kocher, J. Jaffe, and B. Jun, Differential Power Analysis, CRYPTO 199, LNCS 1666, pp.388-397, Springer-Verlag, 1999.

Non-patent Document 13: J.-S. Coron, Resistance against Differential Power Analysis for Elliptic Curve Cryptosystems, CHES '99, LNCS 1717, pp. 292-302, Springer-Verlag, 1999.

Non-patent Document 14: D. Hankerson, J.L. Hernadez, and A. Menezes, "Software Implementation of Elliptic Curve Cryptography over Binary Fields", CHES 2000, LNCS 1965, pp. 1-24, Springer-Verlag, 2000.

Disclosure of Invention

Problems to Be Solved by the Invention

In contrast to the elliptic curve cryptography (ECC) currently moving to a practical use phase, the hyperelliptic curve cryptography (HECC) extended from the ECC has been actively studied to develop a high-speed algorithm and an implementation method of the high-speed algorithm at an academic society level. An arithmetic time of the scalar multiplication of the hyperelliptic curve cryptography (HECC) is simply close to that of the elliptic curve cryptography (ECC) and remains to be further shortened.

The present invention has been developed in view of the above situation, and it is an object of the present invention to provide an encryption processing apparatus, an encryption processing method, and a computer program for shortening the arithmetic time of the scalar multiplication of the hyperelliptic curve cryptography (HECC) and performs the hyperelliptic curve cryptography (HECC) process at high speed.

More specifically, it is an object of the present invention to provide an encryption processing apparatus, an encryption processing method, and a computer program for executing at high speed the scalar multiplication with any divisor selected by dividing a standard divisor divided into theta divisors. With the method of the present invention, a high-speed technique that was used only on a fixed input divisor is applicable to a random input divisor, and the scalar multiplication of the hyperelliptic curve cryptography can be expedited. Furthermore, since the standard divisor is adopted as a base point, a scalar multiplication high-speed technique using the standard divisor is also applicable in an environment where no memory limitation is imposed on the encryption processing apparatus, and as a result, flexibility is promoted.

Means for Solving the Problems

In accordance with a first aspect of the present invention, an encryption processing apparatus for performing an encryption process based on hyperelliptic curve cryptography, includes a divisor control block for executing a control process on a divisor that is a target of scalar multiplication, and a scalar multiplication executing block for executing a scalar multiplication process using a divisor determined under the control of the divisor control block, wherein if a standard divisor having a weight equal to a genus g is the target divisor of the scalar multiplication process in the hyperelliptic curve cryptography of the genus g, the divisor control block determines whether the standard divisor is divisible into a theta divisor defined as having a weight less than the genus g, and, if the standard divisor is divisible, executes the control process to cause the scalar multiplication executing block to perform the scalar multiplication process using the theta divisor generated by dividing the standard divisor.

Furthermore, in accordance with one embodiment of the encryption processing apparatus of the present invention, the divisor control block may function as a base point generator and perform a process to generate as a base point a standard divisor divisible into the theta divisors, wherein the scalar multiplication executing block performs the scalar multiplication process using the theta divisor set by dividing the standard divisor as the base point.

Furthermore, in accordance with one embodiment of the encryption processing apparatus of the present invention, the divisor control block may determine whether a random divisor input as a target of the scalar multiplication process is divisible into the data targets, and perform the control process to cause the scalar multiplication executing block to perform the scalar multiplication process using the theta divisor generated through dividing the standard divisor if the random divisor is divisible, and to cause the scalar multiplication executing block to perform the scalar multiplication process using the standard divisor if the random divisor is indivisible.

Furthermore, in accordance with one embodiment of the encryption processing apparatus of the present invention, the divisor control block may determine whether a random divisor input as a target of the scalar multiplication process is divisible into the data targets, repeat a doubling calculation process on the input divisor and a divisibility determination process of determining whether the doubling calculation result divisor is divisible into the theta divisors if the input divisor is indivisible, and perform the control process to cause the scalar multiplication executing block to perform the scalar multiplication process using the theta divisor generated by dividing the doubling calculation result divisor if the doubling calculation result divisor divisible into the theta divisors is detected.

Furthermore, in accordance with one embodiment of the encryption processing apparatus of the present invention, the scalar multiplication executing block may repeat a halving calculation by the number of times equal to the number of times of doubling calculations after performing the scalar multiplication process using the theta divisor set by dividing the doubling calculation result divisor, in order to calculate the scalar multiplication of the input divisor:

Furthermore, in accordance with one embodiment of the encryption processing apparatus of the present invention, the divisor control block, functioning as a key generator, may perform a generation process of generating, as key data, the standard divisor divisible into the theta divisor, and store the generated key data onto a memory, and the scalar multiplication executing block may perform the scalar multiplication process using the theta divisor set by dividing the standard divisor as the key data.

Furthermore, in accordance with one embodiment of the encryption processing apparatus of the present invention, the divisor control block may store onto the memory the theta divisor set by dividing the key data as the standard divisor.

Furthermore, in accordance with one embodiment of the encryption processing apparatus of the present invention, the scalar multiplication executing block may perform in the hyperelliptic curve cryptography of genus 2 a transform process of a scalar multiplication kD of a standard divisor D represented by $kD=kP_1+kP_2$ using two theta divisors $P_1$ and $P_2$, in order to perform the scalar multiplication process with the theta divisors $P_1$ and $P_2$ applied using a simultaneous calculation operation.

Furthermore, in accordance with one embodiment of the encryption processing apparatus of the present invention, the scalar multiplication executing block may perform in the hyperelliptic curve cryptography of genus 2 a transform process of a scalar multiplication kD of a standard divisor D represented by $kD=k_1P_1+k_2P_2(k_1-k)P_1-(k_2k)P_2$ with $k_1$ and $k_2$ being odd integer and even integers, using two theta divisors $P_1$ and $P_2$, in order to perform the scalar multiplication process with the theta divisors $P_1$ and $P_2$ applied using a simultaneous calculation operation.

Furthermore, in accordance with one embodiment of the encryption processing apparatus of the present invention, the scalar multiplication executing block may perform in the hyperelliptic curve cryptography of genus 2 a transform process of a scalar multiplication kD of a standard divisor D represented by $kP_1+(k+1)P_2-P_2$ or $kP_1+(k-1)P_2+P_2$ using two theta divisors $P_1$ and $P_2$, in order to perform the scalar multiplication process with the theta divisors $P_1$ and $P_2$ applied.

Furthermore, in accordance with one embodiment of the encryption processing apparatus of the present invention, the scalar multiplication executing block may perform in the hyperelliptic curve cryptography of genus 3 a transform process of a scalar multiplication kD of a standard divisor D represented by $kP_1+(k+1)P_2-P_2$ or $kP_1+(k-1)P_2+P_2$ using two theta divisors $P_1$ and $P_2$, in order to perform the scalar multiplication process with the theta divisors $P_1$ and $P_2$ applied using a simultaneous calculation operation.

Furthermore, in accordance with one embodiment of the encryption processing apparatus of the present invention, the scalar multiplication executing block may perform in the hyperelliptic curve cryptography of genus 4 a transform process of a scalar multiplication kD of a standard divisor D represented by $kP_1+(k+1)P_2-P_2$ or $kP_1+(k-1)P_2+P_2$ using two theta divisors $P_1$ and $P_2$, in order to perform the scalar multiplication process with the theta divisors $P_1$ and $P_2$ applied using a simultaneous calculation operation.

Furthermore, in accordance with one embodiment of the encryption processing apparatus of the present invention, the scalar multiplication executing block may perform in the hyperelliptic curve cryptography of genus g the scalar multiplication process with the standard divisor divided into three theta divisors using a simultaneous calculation operation.

Furthermore, in accordance with one embodiment of the encryption processing apparatus of the present invention, in the hyperelliptic curve cryptography of genus 3, the scalar multiplication executing block may divide a scalar multiplication kD of a standard divisor D into $kP_1+(k+1)P_2-P_2$ or $kP_1+(k-1)P_2+P_2$ or $kP_3$ using three theta divisors $P_1$,

$P_2$, and $P_3$ of weight 1, in order to perform the scalar multiplication process with the theta divisors $P_1$, $P_2$, and $P_3$ applied using a simultaneous calculation operation and a double-and-add-always calculation operation.

Furthermore, in accordance with one embodiment of the encryption processing apparatus of the present invention, the scalar multiplication executing block may perform the scalar multiplication process using a simultaneous calculation operation by dividing the standard divisor into at least two theta divisors in the hyperelliptic curve cryptography of genus g.

In accordance with a second aspect of the present invention, an encryption processing method of an encryption processing apparatus for performing an encryption process based on hyperelliptic curve cryptography, includes a divisor control step of a divisor control block for executing a control process on a divisor that is a target of scalar multiplication, and a scalar multiplication step of a scalar multiplication executing block for executing a scalar multiplication process using a divisor determined under the control of the divisor control block, wherein the divisor control step includes determining whether the standard divisor is divisible into a theta divisor defined as having a weight less than the genus g if a standard divisor having a weight equal to a genus g in the hyperelliptic curve cryptography of the genus g is a target divisor of the scalar multiplication process, and executing the control process to cause the scalar multiplication executing block to perform the scalar multiplication process using the theta divisor generated by dividing the standard divisor if the standard divisor is divisible.

Furthermore, in accordance with one embodiment of the encryption processing method of the present invention, the divisor control step may include performing a base point generation process to generate as a base point the standard divisor divisible into the theta divisors, and the scalar multiplication step may include performing the scalar multiplication process using the theta divisor set by dividing the standard divisor as the base point.

Furthermore, in accordance with one embodiment of the encryption processing method of the present invention, the divisor control step may include determining whether a random divisor input as a target of the scalar multiplication process is divisible into the data targets, and performing the control process to cause the scalar multiplication executing block to perform the scalar multiplication process using the theta divisor generated through dividing the standard divisor if the random divisor is divisible, and to cause the scalar multiplication executing block to perform the scalar multiplication process using the standard divisor if the random divisor is indivisible.

Furthermore, in accordance with one embodiment of the encryption processing method of the present invention, the divisor control step may include determining whether a random divisor input as a target of the scalar multiplication process is divisible into the data targets, repeating a doubling calculation process on the input divisor and a divisibility determination process of determining whether the doubling calculation result divisor is divisible into the theta divisors if the input divisor is indivisible, and performing the control process to cause the scalar multiplication executing block to perform the scalar multiplication process using the theta divisor generated by dividing the doubling calculation result divisor if the doubling calculation result divisor divisible into the theta divisors is detected.

Furthermore, in accordance with one embodiment of the encryption processing method of the present invention, the scalar multiplication step may include repeating a halving calculation by the number of times equal to the number of times of doubling calculations after performing the scalar multiplication process using the theta divisor set by dividing the doubling calculation result divisor, in order to calculate the scalar multiplication of the input divisor.

Furthermore, in accordance with one embodiment of the encryption processing method of the present invention, the divisor control step may include performing a generation process of generating, as key data, the standard divisor divisible into the theta divisor, and storing the generated key data onto a memory, and the scalar multiplication step may include performing the scalar multiplication process using the theta divisor set by dividing the standard divisor as the key data.

Furthermore, in accordance with one embodiment of the encryption processing method of the present invention, the divisor control step may include storing onto the memory the theta divisor set by dividing the key data as the standard divisor.

Furthermore, in accordance with one embodiment of the encryption processing method of the present invention, the scalar multiplication step may include performing in the hyperelliptic curve cryptography of genus 2 a transform process of a scalar multiplication kD of a standard divisor D represented by $kD=kP_1+kP_2$ using two theta divisors $P_1$ and $P_2$, in order to perform the scalar multiplication process with the theta divisors $P_1$ and $P_2$ applied using a simultaneous calculation operation.

Furthermore, in accordance with one embodiment of the encryption processing method of the present invention, the scalar multiplication step may include performing in the hyperelliptic curve cryptography of genus 2 a transform process of a scalar multiplication kD of a standard divisor D represented by $kD=k_1P_1+k_2P_2-(k_1-k)P_1-(k_2-k)P_2$ with $k_1$ and $k_2$ being odd integer and even integers, using two theta divisors $P_1$ and $P_2$, in order to perform the scalar multiplication process with the theta divisors $P_1$ and $P_2$ applied using a simultaneous calculation operation.

Furthermore, in accordance with one embodiment of the encryption processing method of the present invention, the scalar multiplication step may include performing in the hyperelliptic curve cryptography of genus 2 a transform process of a scalar multiplication kD of a standard divisor D represented by $kP_1+(k+1)P_2-P_2$ or $kP_1+(k-1)P_2+P_2$ using

two theta divisors $P_1$ and $P_2$, in order to perform the scalar multiplication process with the theta divisors $P_1$ and $P_2$ applied.

Furthermore, in accordance with one embodiment of the encryption processing method of the present invention, the scalar multiplication step may include performing in the hyperelliptic curve cryptography of genus 3 a transform process of a scalar multiplication kD of a standard divisor D represented by $kP_1+(k+1)P_2-P_2$ or $kP_1+(k-1)P_2+P_2$ using two theta divisors $P_1$ and $P_2$, in order to perform the scalar multiplication process with the theta divisors $P_1$ and $P_2$ applied using a simultaneous calculation operation.

Furthermore, in accordance with one embodiment of the encryption processing method of the present invention, the scalar multiplication step may include performing in the hyperelliptic curve cryptography of genus 4 a transform process of a scalar multiplication kD of a standard divisor D represented by $kP_1+(k+1)P_2-P_2$ or $kP_1+(k-1)P_2+P_2$ using two theta divisors $P_1$ and $P_2$, in order to perform the simultaneous scalar multiplication process with the theta divisors $P_1$ and $P_2$ applied using a simultaneous calculation operation.

Furthermore, in accordance with one embodiment of the encryption processing method of the present invention, the scalar multiplication step may include performing in the hyperelliptic curve cryptography of genus g the simultaneous scalar multiplication process with the standard divisor divided into three theta divisors using a simultaneous calculation operation.

Furthermore, in accordance with one embodiment of the encryption processing method of the present invention, in the hyperelliptic curve cryptography of genus 3, the scalar multiplication step may include dividing a scalar multiplication kD of a standard divisor D into $kP_1+(k+1)P_2-P_2$ or $kP_1+(k-1)P_2+P_2$ or $kP_3$ with three theta divisors $P_1$, $P_2$, and $P_3$ of weight 1 applied, in order to perform the scalar multiplication process with the theta divisors $P_1$, $P_2$, and $P_3$ applied using a simultaneous calculation operation and a double-and-add-always calculation operation.

Furthermore, in accordance with one embodiment of the encryption processing method of the present invention, the scalar multiplication step may include performing the scalar multiplication process using a simultaneous calculation operation by dividing the standard divisor into at least two theta divisors in the hyperelliptic curve cryptography of genus g.

In a third aspect of the present invention, a computer program of an encryption processing apparatus for performing an encryption process based on hyperelliptic curve cryptography, includes a divisor control step of a divisor control block for executing a control process on a divisor that is a target of scalar multiplication, and a scalar multiplication step of a scalar multiplication executing block for executing a scalar multiplication process using a divisor determined under the control of the divisor control block, wherein the divisor control step includes determining whether the standard divisor is divisible into a theta divisor defined as having a weight less than the genus g if a standard divisor having a weight equal to a genus g in the hyperelliptic curve cryptography of the genus g is a target divisor of the scalar multiplication process, and executing the control process to cause the scalar multiplication executing block to perform the scalar multiplication process using the theta divisor generated by dividing the standard divisor if the standard divisor is divisible.

Also, the computer program of the present invention may be supplied in a computer readable format in a recording medium or via a communication medium to a computer system that performs a variety of program codes, wherein the recording medium, for example, may be CD, FD, MO, or the like and wherein the communication medium may be a network. By supplying the program in a computer readable format, the computer system can perform processes responsive to the program.

Other objects, features and advantages of the present invention will be apparent from the following detailed description of the invention in conjunction with the embodiments of the invention and the accompanying drawings. In the specification, the term system means a logical set of a plurality of apparatuses, and each apparatus having elements is not necessarily contained in the same housing.

Advantages

In accordance with the structure of the present invention, the target divisor of the scalar multiplication is controlled in the scalar multiplication to the divisor D of hyperelliptic curve cryptography and high-speed scalar multiplication is performed. More specifically, if the standard divisor having the weight equal to the genus g is the target divisor of the scalar multiplication, a determination as to whether the standard divisor is divisible into the theta divisor defined as a divisor having a weight less than the genus g is performed, and if the standard divisor is divisible, the theta divisor is generated by dividing the standard divisor, the scalar multiplication executing block performs the scalar multiplication using the theta divisor, a high-speed scalar multiplication is performed with a calculation amount reduced and a high-speed encryption process operation is thus performed.

Brief Description of the Drawings

[Fig. 1] Fig. 1 illustrates an arithmetic sequence of a scalar multiplication of a divisor as a theta divisor.

[Fig. 2] Fig. 2 illustrates an encryption processor performing a scalar multiplication of a divisor in an encryption processing apparatus of the present invention.

[Fig. 3] Fig. 3 illustrates a relationship between s standard divisor and a theta divisor.

[Fig. 4] Fig. 4 illustrates a structure and a process of the encryption processor with a fixed standard divisor input.

[Fig. 5] Fig. 5 is a flowchart illustrating a specific process example of a base point generation process performed by a divisor control block.

[Fig. 6] Fig. 6 illustrates a structure and a process of the encryption processor in response to a random standard divisor input as an input divisor performing the scalar multiplication.

[Fig. 7] Fig. 7 is a flowchart illustrating a process of the divisor control block as a standard divisor division determination processor.

[Fig. 8] Fig. 8 is a flowchart illustrating a process of the scalar multiplication that is performed by doubling the input divisor to the extent that the input standard divisor becomes divisible by 2 if it is determined that the random input divisor is indivisible into theta divisors.

[Fig. 9] Fig. 9 illustrates a structure of the encryption processor that performs a process of setting a divisor going to be a public key to be as a divisor divisible into a theta divisor.

[Fig. 10] Fig. 10 is a flowchart illustrating in detail a sequence of a key generation process in which the divisor going to be a public key is set to be a divisor divisible into a theta divisor.

[Fig. 11] Fig. 11 illustrates a known DH (Diffie-Hellman) key sharing algorithm.

[Fig. 12] Fig. 12 illustrates a DH (Diffie-Hellman) key sharing algorithm that is configured so that a divisor divisible into a theta divisor is generated beforehand as a public key.

[Fig. 13] Fig. 13 is a flowchart of a method in which a scalar multiplication kD of a standard divisor D is divided into two theta divisors $P_1$ and $P_2$, and $kP_1+kP_2$ is calculated as the scalar multiplication of the divided theta divisors using a simultaneous calculation technique.

[Fig. 14] Fig. 14 is a flowchart of a method in which a standard divisor D is divided into $P_1$ and $P_2$, and the scalar multiplication kD of the standard divisor D being $k_1P_1+k_2P_2-(k_1-k)P_1-(k_2-k)P_2$ is calculated using a simultaneous calculation technique.

[Fig. 15] Fig. 15 is a flowchart illustrating a calculation method performed by a scalar multiplication executing block with $k_1=k$ and $k_2=k+1$ with $k_1$ and $k_2$ being a pair of even and odd scalar quantities.

[Fig. 16] Fig. 16 is a flowchart illustrating a specific process sequence of a signed binary expansion of k and k+1 in step 5623 in a process flow of Fig. 15.

[Fig. 17] Fig. 17 illustrates a structure of a IC module as an encryption processing device performing an encryption process arithmetic operation in accordance with the present invention.

Best Mode for Carrying Out the Invention

As described below, an encryption processing apparatus, an encryption processing method, and a computer program are described in detail. The description is provided in conjunction with the following items.

(1) Summary of the encryption process of the present invention
(2) Specific structure and process example of the encryption processing apparatus of the present invention

(2-1) Process representing a standard divisor D by theta divisors P1, P2, ..., Pi (i≤g)
(2-2) Process calculating a scalar multiplication kD using the theta divisors P1, P2, ..., Pi

(3) Verification of high-speed operation of the encryption process of the present invention
(4) Structure of the encryption processing apparatus

[(1) Summary of the encryption process of the present invention]

The present invention relates to a high-speed calculation technique applied to a Hyper Elliptic Curve Cryptography (HECC) that is a generalized form of the elliptic curve cryptography. As previously discussed, a value characteristic of a curve in the hyperelliptic curve line is a genus g. A hyperelliptic curve C of the genus G defined on a finite field Fq (here q=pn, and p being a prime) is defined in the following equation

$$y^2+h(x)y=f(x).$$

Here, h(x), f(x)∈Fq[x], and f(x) are, at most, a polynomial of an order g (h=0 if p is an odd prime), and f(x) is a monic polynomial of an order 2g+1.

As previously discussed, a formal sum of points is referred to as a divisor in the hyperelliptic curve cryptography, and a weight of the divisor is equal to or smaller than the genus (g) in the hyperelliptic curve cryptography of the genus g. A divisor having a weight equal to the genus (g) is referred to as a standard divisor, and a divisor having a weight smaller than the genus (g) is referred to as a theta divisor.

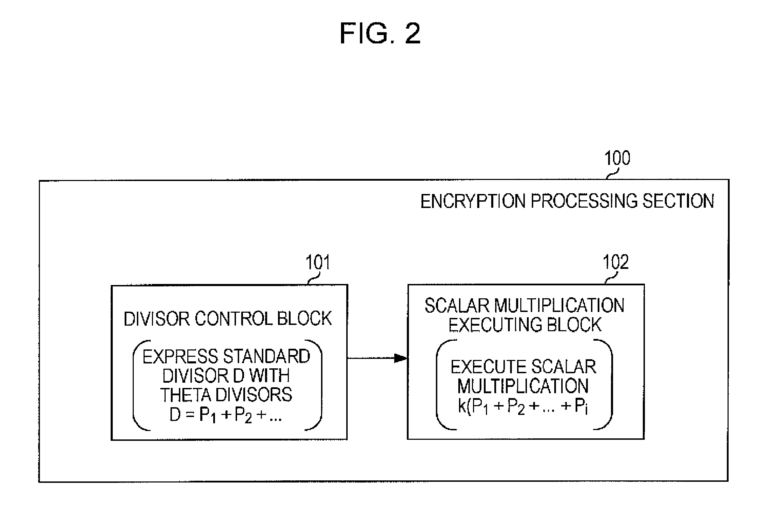

By allowing the scalar multiplication to be performed with the standard divisor divided in the theta divisor, the present invention causes the scalar multiplication to be performed at high speed with any divisor selected. Operation of the scalar multiplication performed by the encryption processing apparatus of the present invention is described with reference to Fig. 2. As shown in Fig. 2, an encryption processor 100 of the encryption processing apparatus of the present invention performing the scalar multiplication of the divisor includes a divisor control block 101 and a scalar multiplication executing block 102.

The divisor control block 101 performs a process to express a divisor D using theta divisors $P_1$, $P_2$, ..., $P_i$ (i≤g). The scalar multiplication executing block 102 performs a process to calculate a scalar multiplication kD using the theta divisors $P_1$, $P_2$, ..., $P_i$ as converted data corresponding to the standard divisor D.

As previously discussed, since the addition of the theta divisor and the standard divisor is larger in arithmetic size than the addition of the standard divisors, the use of the scalar multiplication leads to a high-speed scalar multiplication as a result. The operation of the scalar multiplication of the present invention is described below in detail.

[(2) Specific structure and process example of the encryption processing apparatus of the present invention]

As below, the process of the divisor control block 101 and the process of the scalar multiplication executing block 102 shown in Fig. 2, i.e., the following two processes

(2-1) Process representing a standard divisor D by theta divisors P1, P2, ..., Pi (i≤g),
(2-2) Process calculating a scalar multiplication kD using the theta divisors F1, P2, ..., Pi,

are successively described.

[(2-1) Process representing a standard divisor D by theta divisors P1, P2, .,., Pi (i≤g)]

First, the process of the divisor control block 101 of Fig. 2, i.e., process representing a standard divisor D by theta divisors P1, P2, ..., Pi (i≤g) is described.

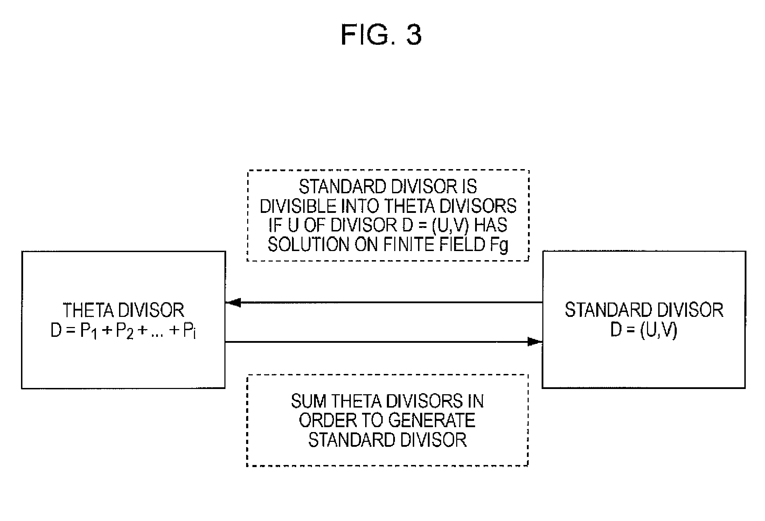

First, the relationship of the standard divisor and the theta divisor is described with reference to Fig. 3. Generally, there are times when the standard divisor D is divisible into theta divisors of g or smaller number in the hyperelliptic curve cryptography of the genus g.

As previously discussed, any reduced divisor D of the genus 2 is expressed as a set of polynomials of the second order or lower having as a coefficient a element on the finite field Fq using the Mumford, namely,

$$(U,V) = (x^2 + u_1 x + u_0, v_1 x + v_0).$$

Furthermore, any reduced divisor D of the genus 2 is expressed as a set of polynomials of the second order or lower having as a coefficient a element on the finite field Fq using the Mumford, namely,

$$(U,V) = (x^3 + u_2 x^2 + u_1 x + u_0, v_2 x^2 + v_1 x + v_0).$$

In the Mumford representation of the divisor, D=(U,V), U represents a weight g, namely, a one-variable polynomial of g-th order.

If U has a solution on the finite field Fq defining the curve in the standard divisor D=(U,V), there are times when the standard divisor D can be divided into theta divisors. On the other hand, if U has no solution on the finite field Fq, i,e., is irresducible, the standard divisor cannot be divided into theta divisors.

Also, if a divisor that is generated by generating and adding a plurality of random theta divisors has a weight g equal to the genus g, such a divisor becomes a standard divisor. In this way, there are times when the standard divisor having the weight equal to the genus g and the theta divisor having the weight less than the genus g are represented using each other.

The divisor having a weight 1 becomes a theta divisor in each of the genuses (g)=2 and 3, but since generating a random theta divisor of the weight 1 is equivalent to seeking for a point on the hyperelliptic curve, generating such a theta divisor is easy. Furthermore, a divisor having a weight smaller than the genus (g) can be generated by adding a plurality of theta divisors, each having a weight 1.

A process of representing the theta divisor using the standard divisor is described using the above relationship. The process may be different from when the divisor (D) of the scalar multiplication kD is fixed to when the divisor (D) of the scalar multiplication kD is any divisor (random divisor). Whether the divisor as an input to the scalar multiplication of points or divisors is to be fixed or random in the elliptic curve cryptography (ECC) and the hyperelliptic curve cryptography (HECC) generalized from the elliptic curve cryptography (ECC) is determined depending on applications of encryption to be performed.

For example,

(a) a key generation algorithm or a signature generation algorithm of DSA is available as an algorithm for executing the scalar multiplication with the input divisor being fixed.
(b) a DH (Diffie-Hellman) key exchange algorithm and ElGamal type encryption algorithm is available as an algorithm for executing the scalar multiplication with the input divisor being random.

Further, the signature generation algorithm of DSA is described in the Non-patent document [ECSVDP-DH in IEEE1363/D13 Main Document.]. Also, the DH key exchange algorithm is described in the Non-patent Document [ECSP-DSA and ECVP-DSA in IEEE1363 /D13 Main Document.].

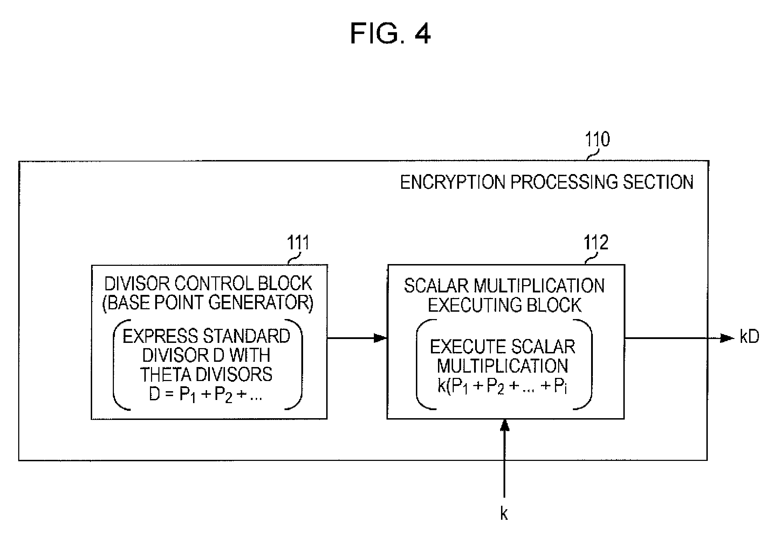

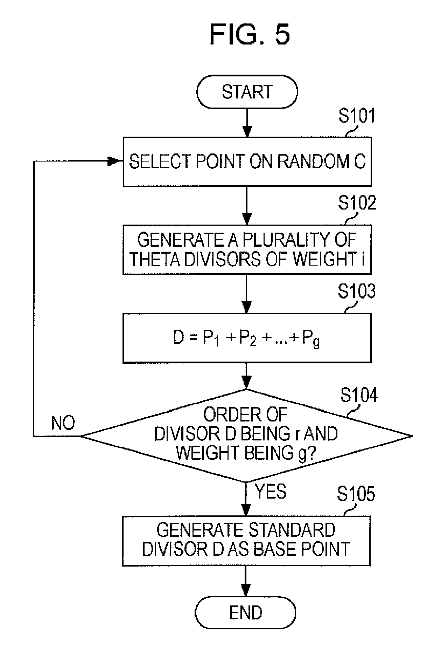

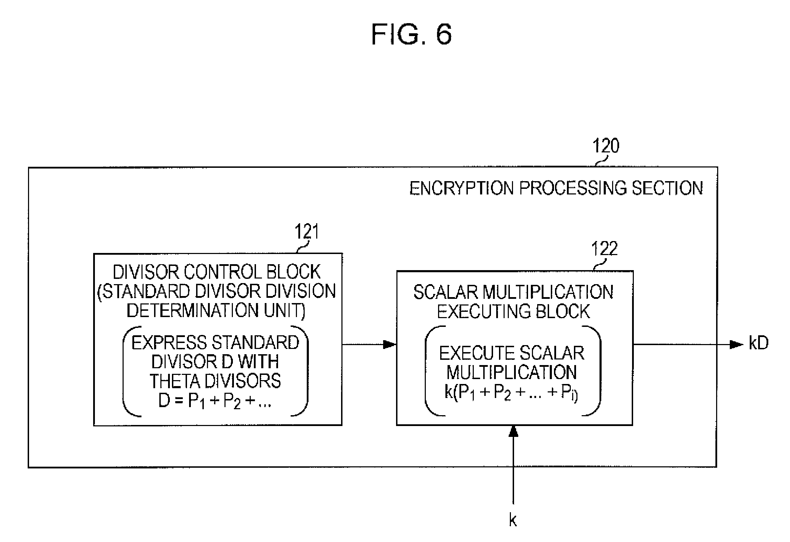

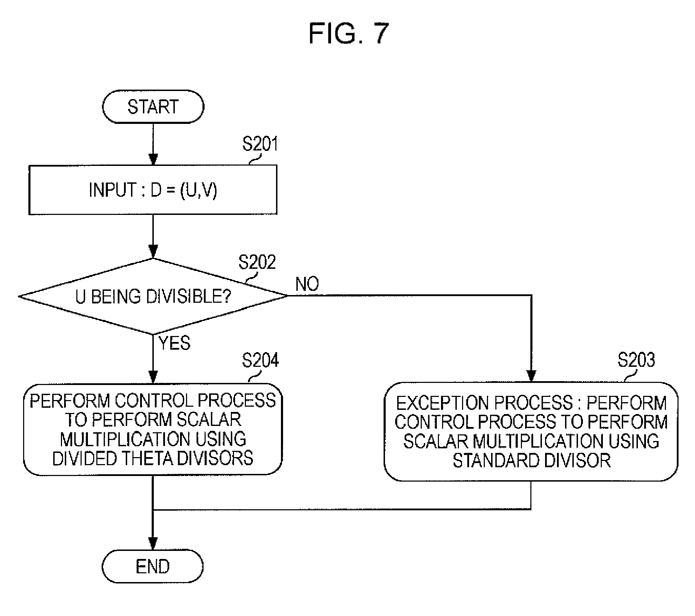

A specific structure of the encryption processor 100 in the encryption processing apparatus of the present invention discussed with reference to Fig. 2 is described below with reference to Fig. 4. A structure and a process of the encryption processor with a fixed standard divisor being input as an input divisor performing the scalar multiplication are described with reference to Fig. 4 and Fig. 5, and a structure and a process of the encryption processor with a random standard divisor being input as an input divisor performing the scalar multiplication are described with reference to Fig. 6 and Fig. 7.

First, a structure and a process of the encryption processor with a fixed standard divisor being input as an input divisor performing the scalar multiplication are described with reference to Fig. 4 and Fig. 5. When the fixed standard divisor is input as an input divisor performing the scalar multiplication, the divisor control block 111 in the encryption processing section 110 functions as a base point generator. The scalar multiplication executing block 112 performs the scalar multiplication in response to an input divisor as a base point generated by the divisor control block 111 as the base point generator. As shown, [k] represents a scalar quantity, and kD represents scalar multiplication results,

Here, a divisor as the base point generated by the divisor control block 111 as the base point generator is a standard divisor indivisible into theta divisors. A specific base point generation process executed by the divisor control block 111 is described with reference to a flowchart of Fig. 5.

The base point generation process of the divisor control block 111 is executed in accordance with the flow of Fig. 5, and the base point is thus generated as a standard divisor divisible into theta divisors. First, in step S101, $g_0$ ($g_0 \leq g$) random points are generated on the hyperelliptic curve C. Next in step S102, a theta divisor having weight i (here i< genus g, for example, i=1) is generated based on the point selected in step S101, and in step S103, an addition operation is performed on the generated theta divisors having weight i in order to generate the standard divisor D. The standard divisor D is a standard divisor having the weight equal to the genus (g).

In succession, in step S104, the generated standard divisor D is evaluated. More specifically, a determination is made of whether the order of the generated standard divisor D has a prime r large enough to be used in encryption. If the answer to the determination is yes, the standard divisor D generated in the addition operation of the theta divisors in step S103 is determined as a base point, and this completes the base point generation process.

On the other hand, if it is determined in the evaluation step of the standard divisor D in step S104 that the order of the standard divisor D has no prime r large enough to be used in encryption, processing returns to step S101 to perform a selection step for selecting a random point on the curve. The point to be selected here is different from the previously selected point. Hereinafter, steps S101-S104 are repeated until the standard divisor D having as an order the prime r large enough to be used in encryption is acquired in the evaluation step of the standard divisor D in step S104.

If it is determined in the evaluation step of the standard divisor D in step S104 that the order of the standard divisor D has the prime r large enough to be used, that standard divisor D is determined as a base point, and the base point generation process is thus completed. The standard divisor generated in this process becomes a standard divisor generated through the addition operation of the theta divisors.

In the case of the hyperelliptic curve having the genus 3, U is a second order polynomial $x^2+u_1x+u_0, u_i \in Fq$ in the generated standard divisor D=(U,V), and if U can be factorized and expressed as U=$(x-p_1)(x-p_2)$, the standard divisor D can be expressed by two theta divisors having a weight 1, $P_1=(x-p_1,V(p_1))$ and $P_2=(x-P_2,V(p_2))$.

If divisors $Q_1$ and $Q_2$ having weight 2 are generated in the hyperelliptic curve having the genus 3 and the addition $D=Q_1+Q_2$ leads a weight 3, that D is used as a base point.

The scalar multiplication executing block 112 of Fig. 4 inputs the base point generated by the divisor control block 111 as the base point generator in accordance with the process discussed with reference to Fig. 5, and performs the scalar multiplication with the scalar quantity k applied. As a result, scalar multiplication results [kD] are output. Further, the scalar multiplication is performed as a high-speed calculation process with the divided theta divisor. This process will be described in detail later.

Next, a structure and a process of the encryption processor with the random standard divisor input as an input divisor for performing the scalar multiplication are discussed with reference to Fig. 6 and Fig. 7. When the random standard divisor is input as an input divisor for performing the scalar multiplication, a divisor control block 121 in an encryption processing section 120 functions as a standard divisor division determination processor as shown in Fig. 6. The scalar multiplication executing block 122 inputs the divisor generated by the divisor control block 121 as the standard divisor division determination processor and performs the scalar multiplication. As shown, [k] represents the scalar quantity and kD represents scalar multiplication results.

Since the input divisor is a random divisor that is not a particular divisor, the divisor control block 121 as the standard divisor division determination processor determines whether the input divisor is divisible into theta divisors, and performs a control process to modify the calculation process of the scalar multiplication executing block 122.

If U has a solution on the finite field Fq defining the curve as previously discussed with reference to Fig. 3, there are times when the standard divisor D is divisible into at least two theta divisors. On the other hand, if U has no solution on the finite field Fq, i.e., irreducible, the standard divisor cannot be divided into theta divisors. The divisor control block 121 as the standard divisor division determination processor determines whether the input divisor is divisible into theta divisors, and performs the control process to modify the calculation process of the scalar multiplication executing block 122 based on the determination results.

The process of the divisor control block 121 as the standard divisor division determination processor is described below with reference to a flowchart of Fig. 7. In step S201, a random input divisor [D=(U,V)] is input and the divisor control block 121 determines whether the random divisor input in step S202 is divisible into theta divisors. To divide the divisor, an ordinary factorization algorithm is of g-th order polynomial (for factorization algorithm, reference is made to the paper [H. Cohen, "A course in Computational Algebraic Number Theory", Graduate Texts in Mathematics 138, Spring].

The process in step S202, i.e., a determination as to whether the input divisor is divisible into theta divisors is equivalent to a determination as to whether a second-order polynomial U having $F(2^n)$ as a coefficient can be factorized if a finite field defining the curve is $F(2^n)$. To determine whether the factorization is possible, whether the value $Tr(u_0/u_1^2)$ is zero or not is simply determined where $U=x^2+u_1x+u_0$. Here, Tr() represents Trace calculation. With the finite field $F(2^n)$, a Trace calculation amount T is known to be substantially small, and is thus negligible. Furthermore, $(u_0/u_1^2)$ is executed by one inverse element calculation of the finite field and two multiplications, and is thus easily calculated. Further, since the Trace value takes only 0 or 1 in accordance with the definition thereof, the Trace value is divided into theta divisors with a probability 1/2.

If it is determined in step S202 that the input divisor cannot be divided into theta divisors, processing proceeds to step S203 where the scalar multiplication executing block 122 performs the control process to calculate the scalar multiplication of the standard divisor.

On the other hand, if it is determined in step S203 that the input divisor is divisible into theta divisors, processing proceeds to step S204 where the scalar multiplication executing block 122 performs the control process to perform a high-speed scalar multiplication using the theta divisor generated through dividing the standard divisor.

In response to the determination results of the divisor control block 121 as the standard divisor division determination processor, the scalar multiplication executing block 122 of Fig. 6 performs the scalar multiplication using the standard divisor or the high-speed scalar multiplication using the theta divisor generated through dividing the standard divisor. This process will be described in detail later.

The operation of the scalar multiplication performed in response to the input divisor discussed with reference to Fig. 6 and Fig. 7 presents two problems. One problem is that an exceptional process case in step S203 of Fig. 7 occurs frequently because the divisor is not always a divisible divisor. Since the scalar multiplication of the standard divisor takes a longer process time than the scalar multiplication of the theta divisor, this can be a bottleneck in the scalar multiplication. A process step in step S202 of Fig. 7 determining whether the divisor is divisible into theta divisors can be a timing-consuming process depending on the definition field and the genus of the curve.

In the arrangement of the present invention, the use of a method described below overcomes the two problems. The methods (a) and (b) overcoming the problems are described below.

(a) Process of using the doubling operation of the divisor
(b) Process of using a divisor as a public key as a divisor divisible into theta divisors

(a) Process of using the doubling operation of the divisor

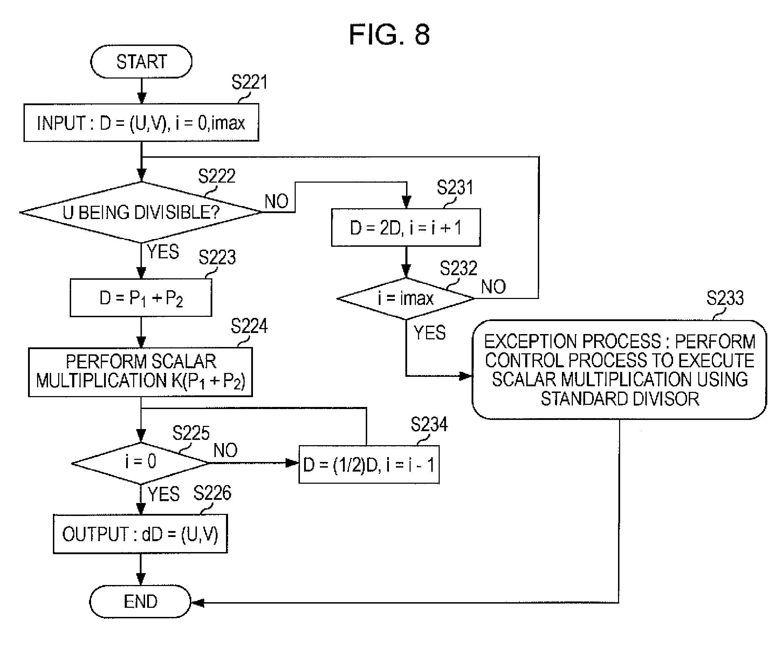

The first method is that the random input divisor is doubled repeatedly until the input standard divisor is divisible by 2 if the random input divisor is determined to be indivisible into theta divisors in the setting of the genus 2 and the definition field $F(2^n)$. A detailed sequence of this process is described with reference to a flowchart of Fig. 8.

Whether the standard divisor D=(U,V) is divisible or not is calculated with a small amount of calculation if the divisor is limited to the divisor of the genus 2 and the definition field $F(2^n)$, First, in step S221, the divisor D=(U,V) is input, and in step S222, a determination of whether the divisor D is divisible into theta divisor is performed.

If it is determined that the input divisor is not divisible into theta divisors, processing proceeds to step S231 to double the input divisor. A variable i indicating the number of iterations is incremented by 1 to set i=i+1. If i is less than a predetermined maximum number of iterations imax, it is determined in step 5222 whether the doubled D=2D is divisible into theta divisors.

Further, a determination in step 5222 as to whether the divisor is divisible is equivalent to a determination as to whether a second-order polynomial U having as a coefficient the finite field $F(2^n)$ can be factorized or not, as previously discussed. To determine whether the factorization is possible, whether the value $Tr(u_0/u_1^2)$ is zero or not is simply determined where $U=x^2+u_1 x+u_0$. Since the Trace value takes only 0 or 1 in accordance with the definition thereof, the Trace value is divided into theta divisors with a probability 1/2. If the doubling calculation is performed by a plurality of times, the divisor is expected to be divided with a high probability.

The process of doubling the input divisor in step S231 and the determination process of determining in step 5222 whether the input divisor is divisible into theta divisors are repeatedly performed. If it is determined in step 5232 that the maximum permissible number of iterations (imax) of doubling calculation set is reached, processing proceeds to step S233 and the scalar multiplication executing block 122 of Fig. 6 performs the control process to perform the scalar multiplication of the standard divisor.

If it is determined in step S222 that the divisor generated in the doubling calculation operation of the input divisor D is divisible into theta divisors, the scalar multiplication executing block 122 performs the scalar multiplication using the theta divisor in step 5224 after the input divisor D is divided into theta divisors in step 5223.

However, the results of the scalar multiplication can be not be the results of the scalar multiplication to the original input divisor. More specifically, since the scalar multiplication is performed in step S231 on the divisor resulting from performing a plurality of doubling calculation operations, the resulting value needs to be converted to back to the results of the scalar multiplication to the original input divisor. This process corresponds to step 5225 and step S234.

First, in step 5225, it is determined whether the number of iterations (i) of the doubling calculations to the input divisor is 0 or not. If i=0, the results of the scalar multiplication are determined to be the results of the scalar multiplication performed on the original input divisor D, and processing proceeds to step 5226 where the results are output as the scalar multiplication results.

If it is determined in step S225 whether the number of iterations (i) of the doubling calculations to the input divisor is not 0, the results of the scalar multiplication obtained at that moment are determined not to be the results of the scalar multiplication to the original input divisor D, and processing proceeds to step S234 where the results are halved. Then, the variable (i) indicating the number of iterations of doubling calculations is decremented by 1, i.e., i=i-1. Furthermore, processing returns to step S225 where it is determined whether the number of iteration of doubling calculations becomes 0 or not.

The processes in step 5225 and step S234 are repeated until i=0, and when i=0 is reached, the results of the scalar multiplication at that moment are determined to be the results of the scalar multiplication of the original input divisor D, and processing proceeds to step 5226 where the results are output as the outputs of the scalar multiplication.

Even if the input divisor is a random divisor, the above-described process converts the input divisor into a divisor divisible into theta divisors in most cases, thereby permitting a high-speed scalar multiplication to be performed.

(b) Process of using a divisor as a public key as a divisor divisible into theta divisors

Next, a process of using a divisor as a public key as a divisor divisible into theta divisors is described. This process sets a limitation of a divisor W becoming a public key to be a divisor divisible into theta divisors in a key generation algorithm generating a secret key and a public key. In many cases, the key generation algorithm does not need to be performed on a real-time basis.

With an arrangement in which a time-consuming division possibility determination process of determining whether the divisor is divisible into theta divisors is performed beforehand in the key generation process, processing is thereafter performed at high-speed with the prior recognition of the public key divisible into theta divisor in the scalar multiplication process in an encryption process with the public key applied.

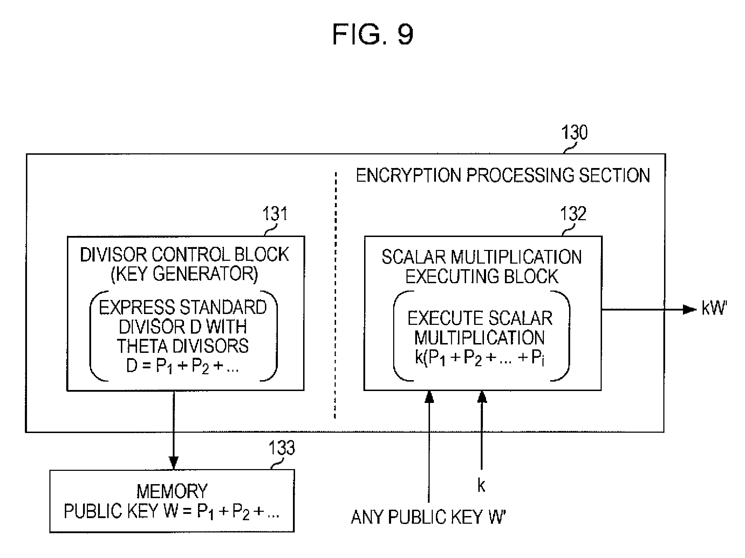

The encryption processor in the encryption processing apparatus of the present invention is described with reference to Fig. 9. As shown in Fig. 9, a divisor control block 131 in an encryption processing section 130 functions as a key generator, thereby generating a public key W, for example. The public key generated here corresponds to the standard divisor, and is composed of a standard divisor visible into theta divisors, and the generated public key is stored onto a memory 133.

The scalar multiplication executing block 132 inputs the divisor generated by the divisor control block 131 functioning as the key generator as a user or in the apparatus, i.e., inputs the public key W', and then performs the scalar multiplication. As shown, [k] represents a scalar quantity and kW' represents results of the scalar multiplication.

Further, the divisor generated by the divisor control block 131 functioning as the key generator as a user or in the apparatus, i.e., the public key W', is stored on the memory 133 as a set of theta divisors Pi. By performing this process, the public key W' generated by any user or the apparatus has already been divided into theta divisors, and a process of dividing the standard divisor corresponding to the public key W' into theta divisors can be omitted during the execution of the scalar multiplication with the public key W' applied, and a high-speed scalar multiplication process is thus performed.

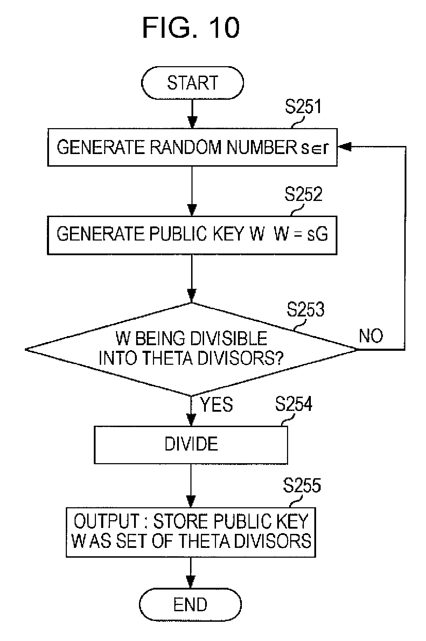

In this way, with an arrangement in which the time-consuming division possibility determination process of determining whether the divisor is divisible into theta divisors is performed beforehand in the key generation process, processing is thereafter performed at high-speed with the prior recognition of the public key divisible into theta divisor in the scalar multiplication process in the encryption process with the public key applied. With this arrangement, the process of the scalar multiplication with the divided theta divisors is performed in a case, not permitting division determination, other than the genus 2 and the definition field $F(2^n)$. A key generation process sequence for setting the divisor becoming the public key as a divisor divisible into theta divisors is described in detail with reference to Fig. 10.

A random number s belonging to an order r of a predetermined base point is generated in step S251, and the public key W=sG is generated in step 5252. G is a base point. Further, the public generated here corresponds to a divisor D which is a formal sum of points in the hyperelliptic curve cryptography (HECC). Next, in step S253, it is determined whether the public key W generated as a divisor is divisible into theta divisors. The process is identical to the process in step 5202 in the flow of Fig. 7 previously discussed, and is performed by verifying whether the second-order polynomial U having as a coefficient the finite field $F(2^n)$ can be factorized.

If it is determined in step 5253 that the public key W generated as a divisor is divisible into theta divisors, a process of dividing the divisor corresponding to the public key W into theta divisors is performed in step S254, and the public key W is stored as a set of theta divisors Pi in step S255.

If it is determined in step 5253 that the public key W generated as a divisor is indivisible into theta divisors, processing returns to step S251 to restart with a random-number generation process. As a result, only a divisor divisible into theta divisors is set as a public key W.

Further, by performing a process of storing the public key W as a set of theta divisors Pi in step S255, the process of dividing the standard divisor corresponding to the public key W into theta divisors can be omitted during the execution of the scalar multiplication with the public key W applied, and a higher speed scalar multiplication process is thus performed.

The known DH (Diffie-Hellman) key sharing algorithm and the DH (Diffie-Hellman) key sharing algorithm using as the public key the divisor divisible into the theta divisors through the above-described key generation process are compared and discussed with each other.

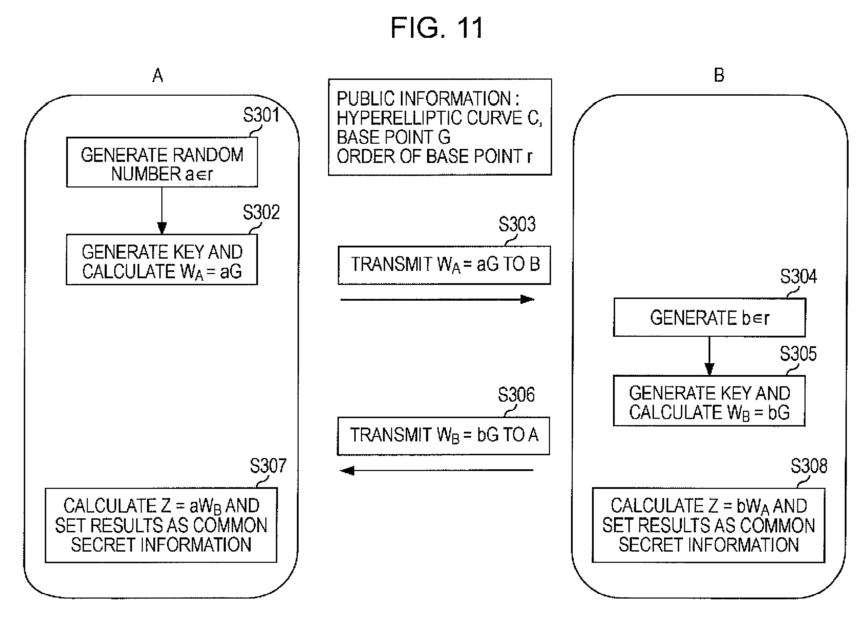

First, the known DH (Diffie-Hellman) key sharing algorithm is described with reference to Fig. 11. Fig. 11 illustrates a sequence of the known DH (Diffie-Hellman) key sharing algorithm executed between A and B communicable with each other. The following information is disclosed as public information:

Hyperelliptic curve: C
Base point: G and
Order of the base point: r.

First, A generates secret information a using a random number, calculates a scalar multiplication aG of the base point G in step S301, generates public key $W_A$ of A in step S302, and transmits the generated public key $W_A$ to B in step S303.

Similarly, B generates secret information B using a random number in step S304, calculates a scalar multiplication bG of the base point G in step S305, generates public key $W_B$ of B, and transmits the generated public key $W_B$ to A in step S306.

In step S307, A calculates shared secret information $Z=aW_B$ using the public key $W_B$ of B and B calculates shared secret information $Z=bW_A$ using the public key $W_A$ of A. Furthermore, the calculation of Z corresponds to the scalar multiplication of the divisor (public key).

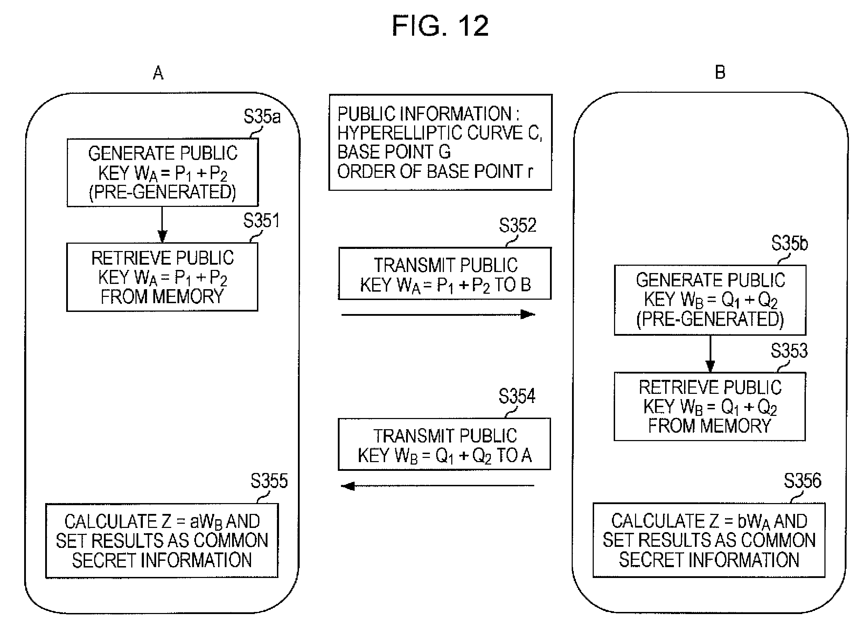

On the other hand, the DH (Diffie-Hellman) key sharing algorithm in which the divisor divisible into the theta divisors through the key generation process previously discussed with reference to Fig. 10 is generated beforehand as the public key is discussed with reference to Fig. 12. Like Fig. 11, Fig. 12 illustrates a sequence of the DH (Diffie-Hellman) key sharing algorithm executed between A and B, communicable with each other. The following information is disclosed as public information:

> Hyperelliptic curve: C
> Base point: G and
> Order of the base point: r.

A process step of each of Step S35a of A and step S35b of B shown in Fig. 12 is the public key generation process of the key generation process discussed with reference to Fig. 10, and is performed to generate beforehand the public key as the divisor divisible into the theta divisors.

A stores on the memory thereof the public key $W_A=P_1+P_2$, and B stores on the memory thereof the public key $W_B=Q_1+Q_2$. $P_1$, $P_2$, $Q_1$ and $Q_2$ are theta divisors.

First, A retrieves from the memory thereof the already generated public key $W_A=P_1+P_2$ in step S351 and transmits the public key $W_A=P_1+P_2$ to B in step S352.

Similarly, B retrieves from the memory thereof the already generated public key $W_B=Q_1+Q_2$ in step S353, and transmits the public key $W_B=Q_1+Q_2$ to A in step 5354.

In step 5355, A calculates the shared secret information $Z=aW_B$ using the public key $W_B=Q_1+Q_2$ of B, and B calculates the shared secret information $Z=bW_A$ using the public key $W_A=P_1+P_2$ of A. The calculation of Z then corresponds to the scalar multiplication of the divisor (public key), and the scalar multiplication can be performed with $P_1$, $P_2$, $Q_1$ and $Q_2$ applied as the theta divisors, and a high-speed scalar multiplication is performed.

[(2-2) Process calculating a scalar multiplication kD using the theta divisors P1, P2, ..., Pi]

Next, the process performed by the scalar multiplication executing block 102 in the encryption processing apparatus of Fig. 2 is described in detail.

As described above, the encryption processing apparatus of the present invention performs the calculation process of the scalar multiplication kD of the divisor D at a high speed using the theta divisor. The scalar multiplication process with the theta divisor applied includes a plurality of techniques. As below, four techniques of (process example A)-(process example D) are successively described.

> (Process example A) Method of dividing the scalar multiplication kD of the standard divisor D into two theta divisors $P_1$ and $P_2$ and calculating $kP_1+kP_2$ using a simultaneous calculation operation in the hyperelliptic curve cryptography of the genus (g) 2.
> (Process example B) Method of dividing the standard divisor D into two theta divisors $P_1$ and $P_2$ and calculating the scalar multiplication kD of the standard divisor D as $k_1P_1+k_2P_2-(k_1-k)P_1-(k_2-k)P_2$ using a simultaneous calculation operation in the hyperelliptic curve cryptography of the genus (g) 2.
> (Process example C) Method of dividing the scalar multiplication kD of the standard divisor D into three theta divisors $P_1$, $P_2$ and $P_3$, each having weight 1 and calculating $kP_1+(k+1)P_2-P_2$ or $kP_1+(k-1)P_2+P_2$ using the simultaneous calculation operation and kP3 using a double-and-add-always operation in parallel, in the hyperelliptic curve cryptography of the genus (g) 3.
> (Process example D) Method of dividing the scalar multiplication kD of the standard divisor D into four theta divisors $P_1$, $P_2$, $P_3$, and $P_4$, each having weight 1 and modifying the resulting theta divisors into $kP_1+(k+1)P_2-P_2$ or $kP_3+(k+1)P_4-P_4$, and performing in parallel the method of the (process example B) in the hyperelliptic curve cryptography of the genus (g) 4.

(Process example A) Method of dividing the scalar multiplication kD of the standard divisor D into two theta divisors $P_1$ and $P_2$ and calculating $kP_1+kP_2$ using a simultaneous calculation operation in the hyperelliptic curve cryptography of the genus (g) 2.

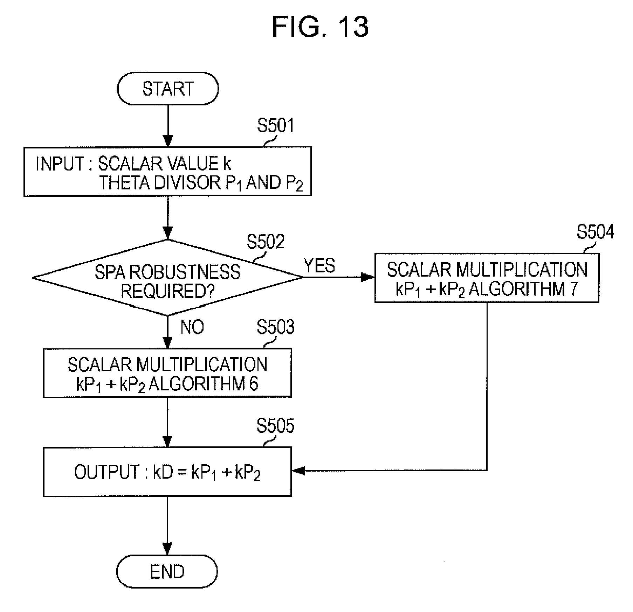

First, Fig. 13 is a flowchart illustrating a method of dividing the scalar multiplication kD of the standard divisor D into two theta divisors $P_1$ and $P_2$ and calculating $kP_1+kP_2$ using a simultaneous calculation operation in the hyperelliptic curve cryptography of the genus (g) 2. The flow of Fig. 13 is the process performed by the scalar multiplication executing block 102 in the encryption processor 100 of Fig. 2. The scalar multiplication executing block 112 in the encryption processing section 110 of Fig. 4, or the scalar multiplication executing block 122 in the encryption processing section 120 of Fig. 6, or the scalar multiplication executing block 132 in the encryption processing section 130 of Fig. 9 performs the process in response to an encryption algorithm to be executed.

First, in step S501, the scalar multiplication executing block inputs the scalar quantity [k] and inputs the theta divisors $P_1$ and $P_2$ from the divisor control block or the memory. Alternatively, the scalar multiplication executing block may input from the divisor control block the standard divisor divisible into theta divisors and performs a process of dividing the standard divisor into theta divisors. The process of dividing the standard divisor into theta divisors may be performed by the divisor control block or the scalar multiplication executing block.

Next, it is determined in step 5502 whether SPA (Simple Power Analysis) robustness is required. Furthermore, the necessity of the SPA robustness may be stored beforehand onto a memory as setting information responsive to the encryption processing algorithm to be performed, and a process of reading and determining the setting information from the memory in response to identification information of an execution algorithm. Fixed information indicating whether the SPA robustness is necessary or unnecessary may be set. In this case, the determination step is omitted.

If it is determined in step S502 that the SPA robustness is not necessary, processing proceeds to step S503 where Algorithm 6 as a scalar multiplication processing algorithm with the theta divisor applied is performed. If it is determined that the SPA robustness is necessary, processing proceeds to step 5504 where Algorithm 7 as the scalar multiplication processing algorithm with the theta divisor applied is performed. The scalar multiplication results of the standard divisor resulting from one of the algorithms, $kD=kP_1+kP_2$, are thus output in step S505.

The Algorithm 6 and the Algorithm 7 are described below.

[Eq. 8]

Algorithm 6

$Input$   $k$, $theta$ factors $P_1$, $P_2$

$Output$   $T = kD = k(P_1 + P_2)$

$T \leftarrow P_1 + P_2$

$for\ i\ from\ n-2\ to\ 0$

{

   $T \leftarrow 2T$

   $if\ k_i \neq 0\ then\ \{$

      $T \leftarrow T + P_1$   // TADD

      $T \leftarrow T + P_2$   // TADD

   }

}

$return\ T$

[Eq. 9]

Algorithm 7

*Input* k, *theta* factors $P_1$, $P_2$

*Output* $T = kD = k(P_1 + P_2)$

$T[0] \leftarrow P_1 + P_2$

*for i from* n - 2 *to* 0

{

   $T[0] \leftarrow 2T[0]$

   $T[1] \leftarrow T[0] + P_1$    // TADD

   $T[1] \leftarrow T[1] + P_2$    // TADD

   $T[0] \leftarrow T[k_i]$

}

*return* T

Each of the above-described Algorithm 6 and the Algorithm 7 performs the scalar multiplication of kP1+kP2 using the theta divisor having a weight less than the genus (g), and outputs the scalar multiplication results of the standard divisor as a result. More specifically,

$$kD = kP_1 + kP_2$$

In accordance with the above equation, the scalar multiplication results of the standard divisor are output. As previously discussed, the process using the theta divisor features calculation costs lower than the scalar multiplication using directly the standard divisor, thereby providing calculation results at high speed.

More specifically, let [MFCADD] define the addition of the standard divisors and [TADD] define the addition of the standard divisor and the theta divisor as previously discussed, and the calculate cost of the addition [MFCADD] of the standard divisors is I+25M, and the calculation cost of the addition [TADD] of the standard divisor and the theta divisor is I+11M, if the definition field is $F(2^n)$ in the hyperelliptic curve cryptography of the genus 2, and TADD is 14M faster. Here, I and M represent an inverse element calculation and multiplication on the finite field $F(2^n)$, I+25M means that one inverse element calculation and 25 multiplications are needed, and I+11M means that one inverse element calculation and 11 multiplications are needed.

Using the theta divisor in this way, a high-speed scalar multiplication can be performed, and the encryption processing results are obtained fast.

(Process example B) Method of dividing the standard divisor D into two theta divisors $P_1$ and $P_2$ and calculating the scalar multiplication kD of the standard divisor D as $k_1P_1+k_2P_2-(k_1-k)P_1-(k_2-k)P_2$ using a simultaneous calculation operation in the hyperelliptic curve cryptography of the genus (g) 2.

Next, a method of dividing the standard divisor D into two theta divisors $P_1$ and $P_2$ and calculating the scalar multiplication kD of the standard divisor D as $k_1P_1+k_2P_2-(k_1-k)P_1-(k_2-k)P_2$ using a simultaneous calculation operation in the hyperelliptic curve cryptography of the genus (g) 2 is described.

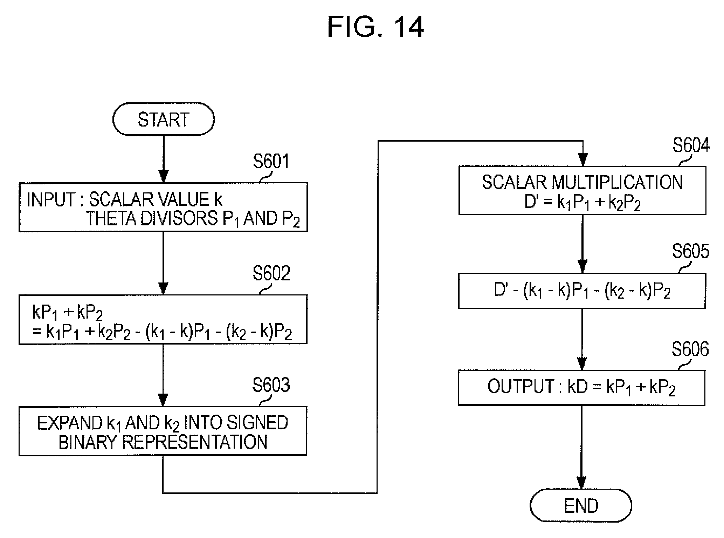

Fig. 14 is a flowchart of the process of the method. The flow of Fig. 14 is performed by the scalar multiplication executing block 102 in the encryption processor 100 of Fig. 2. Furthermore, the scalar multiplication executing block 112 in the encryption processing section 110 of Fig. 4, or the scalar multiplication executing block 122 in the encryption processing section 120 of Fig. 6, or the scalar multiplication executing block 132 in the encryption processing section 130 of Fig. 9 performs the process in response to an encryption algorithm to be executed.

First, in step S601, the scalar multiplication executing block inputs the scalar quantity [k] and inputs the theta divisors $P_1$ and $P_2$ from the divisor control block or the memory. Alternatively, the scalar multiplication executing block may input from the divisor control block the standard divisor divisible into theta divisors and performs a process of dividing the standard divisor into theta divisors. The process of dividing the standard divisor into theta divisors may be performed by the divisor control block or the scalar multiplication executing block.

Next, in step S602, the scalar multiplication kD of the standard divisor D to be calculated is converted into

$$kD=kP_1+kP_2$$

$$=k_1P_1+k_2P_2-(k_1-k)P_1-(k_2-k)P_2.$$

In step S602, the scalar multiplication executing block converts $kP_1+kP_2$ into the format of $k_1P_1+k_2P_2-(k_1k)P_1-(k_2-k)P_2$ using a pair of any even and odd numbered scalar quantities of $k_1$ and $k_2$ as large as about k. In the next step S603, $k_1$ and $k_2$ are signed binary expanded (binary expansion), with $k_1=(k_{1,n-1},.... ., k_{1,0})$ and $k_2=(k_{2,n-1},.... ., k_{2,0})$ so that one of an i-th pair $(k_{1,i},k_{2,1})$ is 0 with the other of the pair being 1 or -1. More specifically, the pair is one of combinations (0,1), (0,-1), (1,0) and (-1,0).

Further in step S604, $kP_1+kP_2$ is calculated in accordance with k1 and k2 expanded in step S603 using the simultaneous calculation operation. Finally in step S605, the term $(k_1-k)P_1+(k_2-k)P_2$ not yet calculated is calculated and added in correction, and in the final step S606, correct results, namely,

$$kD=kP_1+kP_2$$

$$=k_1P_1+k_2P_2-(k_1-k)P_1-(k_2-k)P_2$$

is output.

(Modification B1 of the scalar multiplication method B)

A modified technique to the scalar multiplication using the theta divisor discussed with reference to Fig. 14 is described.

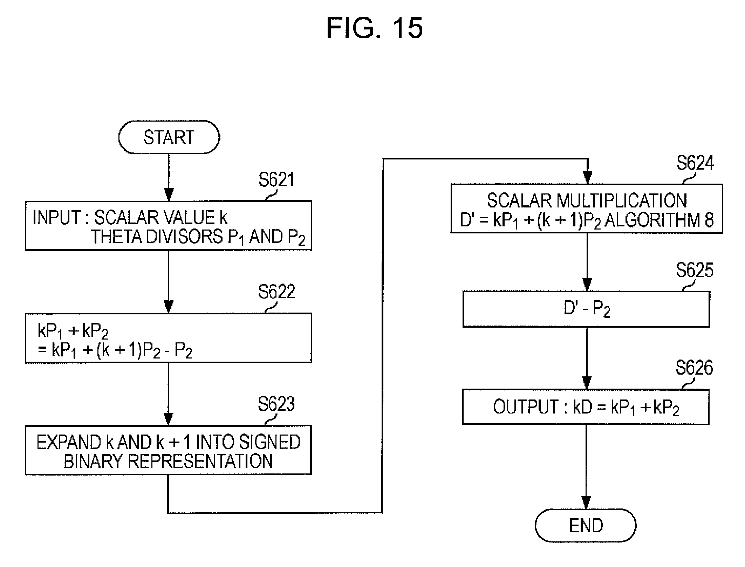

If $k_1$ and $k_2$ are k1=k, k2=k+1 or k2=k-1, in other words, k1=k and |k1-k2|=1, a calculation amount of correction in step S605 of Fig. 14 is decreased, and the scalar multiplication can thus be performed efficiently at high speed. This calculation technique, the method thereof, is described with reference to a flowchart of Fig. 15.

The process flow of Fig. 15 is a calculation process sequence performed by the scalar multiplication executing block with the scalar quantities discussed with the flow of Fig. 14, namely, with a pair of any even and odd numbered scalar quantities of $k_1$ and $k_2$, as large as about k, being $k_1=k$ and $k_2=k+1$. Furthermore, the same process is applicable if $k_2=k-1$.

First, in step S621, the scalar multiplication executing block inputs the scalar quantity [k] and inputs the theta divisors $P_1$ and $P_2$ from the divisor control block or the memory. Alternatively, the scalar multiplication executing block may input from the divisor control block the standard divisor divisible into theta divisors and performs a process of dividing the standard divisor into theta divisors. The process of dividing the standard divisor into theta divisors may be performed by the divisor control block or the scalar multiplication executing block.

Next, in step S602, the scalar multiplication kD of the standard divisor D to be calculated is converted into

$$kD=kP_1+kP_2$$

$$=kP_1+(k+1)P_2-P_2.$$

Furthermore, this equation conversion sets k1 and k2 to be k1=k and k2=k+1, and is equivalent to the conversion equation previously discussed with reference to Fig. 14, i.e., $=k_1P_1+k_2P_2(k_1-k)P_1(k_2-k)P_2$. In the above equation, k1 and k2 being $k_1=k$ and $k_2=k+1$ in pair, $k_1P_1+k_2P_2-(k_1-k)P_1-(k_2-k)P_2= kP_1+(k+1)P_2-P_2$.

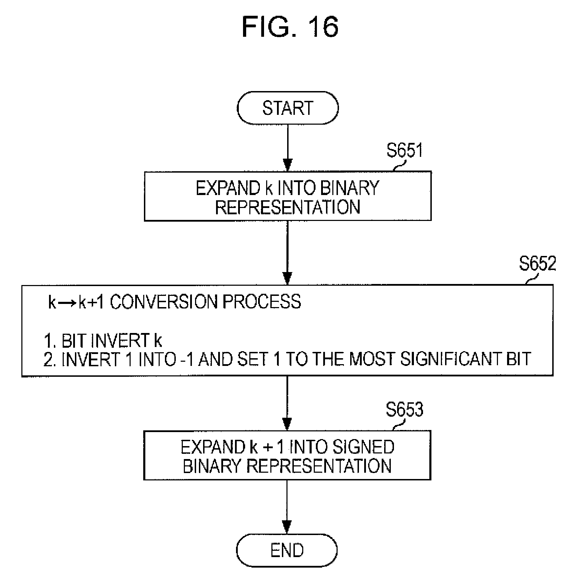

Next, in step S623, $k_1=k$ and $k_2=k+1$ are binary expanded. More specifically, k and k+1 are binary expanded so that a pair of any ibit is (0,1) or (0,-1). This expansion algorithm will be described later with reference to Fig. 16.

In next step S624, $kP_1+(k+1)P_2$ is calculated in accordance with the simultaneous calculation operation using the binary expanded k and k+1. This algorithm as Algorithm 8 is described below.

[Eq. 10]

Algorithm 8

$Input$   $k, theta$ factors $P_1, P_2$

$Output$   $T = kP_1 + (k+1)P_2$

$T \leftarrow 2P_2, \quad T \leftarrow T + P_1$

$for$ $i$ $from$ n-2 $to$ 0

{

  $T \leftarrow 2T$

If $k_i = 1$ then

  $T \leftarrow T + P_1$   // TADD

else

  $T \leftarrow T - P_2$   // TADD

}

$return$ $T$

The above Algorithm 8 is a calculation algorithm of the scalar multiplication using the simultaneous calculation operation with the theta divisor applied. Furthermore, the term $-P_2$ not yet calculated is calculated and then added in step 5625 for correction, and finally in step S626, correct results, namely,

$$kD = kP_1 + kP_2$$
$$= kP_1 + (k+1)P_2 - P_2,$$

is output.

A specific sequence of the signed binary expansion of k and k+1 in step 5623 of the process flow of Fig. 15 is described below with reference to Fig. 16. First, in step S651, k is binary expanded of 0.1.

Next, in step S6252, the scalar quantity k is converted in accordance with a conversion process of

$$k \rightarrow k+1.$$

This conversion process is to invert each bit of the binary expanded k from 0 to 1 and from 1 to 0. Next, if the inverted value is 1, the 1 is replaced -1, and 1 is set to the most significant bit of k. This process results in the signed binary expansion of k+1 in step S653.

For example, the binary expansion is (110101) at k=53, and the bit inverted expansion becomes (001010). If 1 is replaced with -1, 100(-1)0(-1)0 results, and this value becomes 54 as k+1. The conversion process is obvious from the relationship of $k+1 = 2^n - ((2^n - 1) - k)$.

In this way, in the scalar multiplication with the theta divisor applied in accordance with the process flow of Fig. 15, the conversion equation

$$kD = kP_1 + kP_2$$
$$= kP_1 + (k+1)P_2 - P_2$$

holds, and is substituted for the conversion equation previously discussed with reference to Fig. 14, i.e.,

$$kD = kP_1 + kP_2$$

$$= k_1 P_1 + k_2 P_2 - (k_1-k)P_1 - (k_2-k)P_2.$$

The scalar multiplication is performed with the conversion equation discussed with reference to Fig. 14 converted in the simpler equation, and a more efficient and higher speed calculation is thus performed.

Furthermore, this technique is also equally applicable to the hyperelliptic curve cryptography of the genus 3 if the standard divisor D is D=Q1+Q2 with Q1 and Q2 represented as divisors of weight 2 in the hyperelliptic curve cryptography of the genus 3. Generally, this technique is applicable if the standard divisor D of the genus g is divisible into theta divisors.

(Process example C) Method of dividing the scalar multiplication kD of the standard divisor D into three theta divisors $P_1$, $P_2$ and $P_3$, each having weight 1 and calculating $kP_1+(k+1)P_2-P_2$ or $kP_1+(k-1)P_2+P_2$ using the simultaneous calculation operation and kP3 using a double-and-add-always operation in parallel, in the hyperelliptic curve cryptography of the genus (g) 3.

Discussed next is a method of dividing the scalar multiplication kD of the standard divisor D into three theta divisors $P_1$, $P_2$ and $P_3$, each having weight 1 and calculating $kD=kP_1+kP_2+kP_3$ using the simultaneous calculation operation and $kP_1+(k+1)P_2-P_2$ or $kP_1+(k-1)P_2+P_2$ and kP3 using a double-and-add-always operation in parallel, in the hyperelliptic curve cryptography of the genus (g) 3.

Generally, it is difficult to modify k into three different values $k_1$, $k_2$, and $k_3$ in the same manner as the previously described method B, and to signed binary expand the three different values $k_1$, $k_2$, and $k_3$ as

$$k_1 = (k_{1,n-1}, \ldots, k_{1,0}),$$

$$k_2 = (k_{2,n-1}, \ldots, k_{2,0}),$$

$$k_3 = (k_{3,n-1}, \ldots, k_{3,0}),$$

so that one of an i-th set of each expanded data $(k_{1,i}, k_{2,1}, k_{3,1})$ is either 1 or -1 with the remaining data being 0. In this case, the three theta divisors can be scalar multiplied efficiently by combining efficiently the previously discussed (Modification B1 of the scalar multiplication method B) and the double-and-add-always method (Algorithm 5). This scalar multiplication algorithm is referred to as Algorithm 9 and is described below.

[Eq. 11]

$$\underline{\text{Algorithm 9}}$$

*Input*    $k$, *theta* factors $P_1, P_2, P_3$

*Output*    $T = kP_1 + (k+1)P_2 + kP_3$

$T \leftarrow 2P_2, \quad T \leftarrow T + P_1 + P_3$

*for* $i$ *from* $n-2$ *to* $0$

$\{$

     $T \leftarrow 2T$

If $k_i = 1$ then

     $T[1] \leftarrow T + P_1$    // TADD

else

     $T[0] \leftarrow T - P_2$    // TADD

*endif*

$T[1] \leftarrow T[1] + P_3$

$T \leftarrow T[k_i]$

$\}$

$\underline{return \ T}$

The above algorithm is an algorithm that efficiently scalar multiplies the three theta divisors by combining efficiently the previously discussed (Modification B1 of the scalar multiplication method B) and the double-and-add-always method (Algorithm 5), and performs a high-speed calculation operation based on the theta divisor.

(Process example D) Method of dividing the scalar multiplication kD of the standard divisor D into four theta divisors $P_1$, $P_2$, $P_3$, and $P_4$, each having weight 1 and modifying the resulting theta divisors into $kP_1+(k+1)P_2-P_2$ or $kP_3+(k+1)P_4-P_4$, and performing in parallel the method of the (process example B) in the hyperelliptic curve cryptography of the genus (g) 4.

Discussed next is an algorithm of dividing the scalar multiplication kD of the standard divisor D into four theta divisors $P_1$, $P_2$, $P_3$, and $P_4$, each having weight 1, setting $kD=kP_1+kP_2+kP_3+kP_4$, and modifying the resulting theta divisors into $kP_1+(k+1)P_2-P_2$ or $kP_3+(k+1)P_4-P_4$, and performing in parallel the method of the (process example B) in the hyperelliptic curve cryptography of the genus (g) 4, and this algorithm is referred to Algorithm 10.

[Eq. 12]

<u>Algorithm 10</u>

*Input*    *k, theta* factors $P_1, P_2, P_3, P_4$

<u>*Output*    $T = kP_1 + (k+1)P_2 + kP_3 + (k+1)P_4$</u>

$T \leftarrow 2(P_2 + P_4), \quad T \leftarrow T + (P_1 + P_3)$

*for i from* n-2 *to* 0

{

    $T \leftarrow 2T$

If $k_i = 1$ then

    $T \leftarrow T + P_1$    // TADD

    $T \leftarrow T + P_3$    // TADD

else

    $T \leftarrow T - P_2$    // *TADD*

    $T \leftarrow T - P_4$    // TADD

*endif*

}

<u>*return* T</u>

The Algorithm 10 is a calculation algorithm in which $kD = kP_1 + kP_2 + kP_3 + kP_4$ is set and divided into $kP_1 + (k+1)$ $P_2 - P_2$ and $kP_3 + (k+1)P_4 - P_4$, and the scalar multiplication is performed in parallel with the previously discussed (Modification B1 of the scalar multiplication method B) applied, and the algorithm with the theta divisor applied provides calculation results at a high speed with a small amount of calculation involved in comparison with the mutual calculation based on the standard divisors.

[(3) Verification of high-speed operation of the encryption process of the present invention]

First in the scalar multiplication of the fixed divisors, the arrangement of the present invention allows the base point of the divided theta divisors to be stored as a domain parameter on a memory, and allows the scalar multiplication executing block to execute the simultaneous calculation operation of the scalar multiplication using the theta divisor.

For example, the arrangement applies the scalar multiplication process examples A-D using the above-described variety of theta divisors, thereby eliminating the time-consuming mutual standard divisor calculation and instead using the high-speed calculation process with the theta divisor applied and expediting the process. Even higher speed processing is possible by performing the scalar multiplications with the previously discussed (Modification B1 of the scalar multiplication method B) applied. If the calculation pattern of the scalar multiplication is always constant, no difference takes place in arithmetic processing time and the power consumption in the arithmetic process, and a safe and high-speed calculation is performed with robustness assured to the SPA and TA analysis as an arithmetic sequence analysis.

For example, the previously discussed Algorithm 2 is a known technique as a method of performing the scalar multiplication with the standard divisor undivided, and the Algorithm 8 discussed in connection the (Modification B1 of the scalar multiplication method B) previously discussed as one method of the present invention is compared in calculation amount with the known technique.

Let [MFCADD] represent the addition of all the standard divisors,

[MFCDBL] represent the doubling calculation of standard divisors,

[TADD] represent the addition of the standard divisor and the theta divisor, and

[TDBL] represent the doubling calculation of the theta divisor,

with the genus (g) of the hyperelliptic curve cryptography being 2 and the definition field being F(2n), the amount of calculations in the case of the Algorithm 2 as the known technique and in the case of the Algorithm 8 as the method of the present invention are as follows:

Algorithm 2: (n-1)*(MFCDBL+MFCADD)

Algorithm 8: (n-1)*(MFCDBL+TADD)+TDBL+TADD

With n=160 bits, the calculation amounts of MFCDBL, MFCADD, TADD, and TDBL are

$$MFCDBL=I+27M,$$

$$MFCADD=I+25M,$$

$$TADD=I+11M,$$

and

$$TDBL=I+7M$$

with I=6M. Also, I and M represent an inverse element calculation and multiplication on the finite field $F(2^n)$. In this case,

```
Algorithm 2: (n-1)*(MFCDBL+MFCADD),
=(160-1)*((I+27M)+(I+25M))
Algorithm 8: (n-1)*(MFCDBL+TADD)+TDBL+TADD
=(160-1)*((I+27M)+(I+11M)+(I+7M)+(I+11M)
```

the Algorithm 8 is about 22% less in calculation amount than the Algorithm 2, and thus performs a high-speed calculation operation.

As a method with one of a key generation process of the hyperelliptic curve cryptography and a signature generation algorithm of the hyperelliptic curve cryptography DSA, replaced with the hyperelliptic curve cryptography, the arrangement of the present invention is applicable to the scalar multiplication of the fixed divisor having the SPA robustness.

Similarly, in accordance with the present invention, the division possibility determination of the input standard divisor into the theta divisor is determined as previously discussed with reference to Fig, 6 and Fig. 7 in the scalar multiplication of the any (random) divisor, and the input standard divisor, if divisible, is divided into theta divisors, and the scalar multiplication is then performed at a high speed. With this arrangement, the scalar multiplication executing block performs high-speed calculation, and the calculation pattern of the scalar multiplication becomes constant, and further the addition calculation process of the divisors becomes a process including an addition calculation of the theta divisors. No difference takes place in the arithmetic processing time and the power consumption in the arithmetic process, and the safe and high-speed calculation is performed with robustness assured to the SPA and TA analysis as an arithmetic sequence analysis.

On the other hand, the process of dividing the input standard divisor into theta divisors is different in calculation amount depending the genus g and the definition field of the defined hyperelliptic curve.
However, if the "method of generating only the public key divisible into divisors" previously discussed with reference to Fig. 9 and Fig. 10 is applied, the bottleneck in the process step of dividing the standard divisor is overcome, and a process speed as high as the scalar multiplication of the fixed divisors is achieved.

Further, the "method of doubling the divisor until the divisor can be halved in the case of the indivisible divisor with the genus 2 and the definition field $F(2^n)$" previously discussed with reference to Fig. 8 is applied, the division possibility determination of the input standard divisor D into the theta divisors is repeated with the input standard divisor D doubled, an input standard divisor D is thus doubled a plurality of times, the scalar multiplication is performed after the doubled standard divisor D is divided into theta divisors, and a high-speed calculation is thus performed in comparison with the scalar multiplication free from divisor division.

The technique of the doubling calculation of the standard divisor and performing the scalar multiplication with the standard divisor divided into the theta divisors and the known technique of performing the scalar multiplication directly on the standard divisor are verified in terms of calculation amount.

As previously described with reference to the Algorithm 2 as the known technique of performing the scalar multiplication directly on the standard divisor, the calculation amount is

$$n*(MFCDBL+MFCADD).$$

On the other hand, the calculation amount of the doubling calculation of the standard divisor and the sequence of the present invention (the process sequence of Fig. 8) of performing the scalar multiplication with the standard divisor divided into the theta divisors is described below. Here, since the determination of whether the divisor is divisible or not obeys a probability of 1/2, the processes in step S222 and S231 of Fig. 8 are estimated by mean values. Here, let Tr represent the Trace calculation on the finite field $F(2^n)$, Hf represent a half Trace calculation, and MFCHLV represent 1/2 calculation. The calculation estimations in process steps of Fig. 8 are as follows:

Steps 5222 and S231: 2I+4M+2Tr+MFCDBL
Step S223: 3M+Hf
Step S224: TDBL+TADD+(n-1)(MFCDBL+TADD)
Step S234: MFCFHLV

With I=6M in the calculation estimation of the fixed divisor, and Hf=0.5M, Tr=0M, and MFCHLV=28M, the process performed in accordance with the flow of Fig. 8 is expected to result in a high-speed operation about 20% higher than the known technique (Algorithm 2).

Furthermore, a method with the key exchange algorithm ECDH replaced with the hyperelliptic curve cryptography is applicable to the scalar multiplication of any divisor having the SPA robustness.

Furthermore the scalar multiplication of the any divisor requiring the SPA robustness and the DPA robustness is a decoding process of El Gamal method. For example, in the DPA measure known as ECC described in the paper entitled ["J.-S. Coron, Resistance against Differential Power Analysis for Elliptic Curve Cryptosystems, CHES' 99, LNCS 1717, pp. 292-302, Springer-Verlag, 1999.], the scalar multiplication kD of any divisor is modified to be kD=(k+R#J)D because (#J)D=0 using a random number R and an order #J of the Jacobian variety, and the scalar multiplication is performed with secret information k masked with the random number R as the DPA measure. This measure permits an even higher speed calculation using the scalar multiplication of the divisor in accordance with the above-described present invention.

More specifically, the scalar multiplication kD of the divisor is converted using a theta divisor Pn into

$$kD=(k+R\#J)P_1+(k+1+R\#J)P_2-P_2$$

and the scalar multiplication is performed using one of the high-speed scalar multiplication techniques of the divisor of the process examples A-D. Also, the scalar multiplication kD of the divisor is converted using different random numbers $R_1$ and $R_2$ into

$$kD=(k+R_1\#J)P_1+(k+1+R_2\#J)P_2-P_2$$

and the scalar multiplication is performed using one of the high-speed scalar multiplication techniques of the divisor of the process examples A-D.

In accordance with the method of the present invention, even when the scalar multiplication is performed in response to the inputting of the standard divisor, the high-speed calculation using the theta divisor is performed with the standard divisor divided into the theta divisors, and thus the scalar multiplication is performed on the theta divisor in response to the random input divisor, and the scalar multiplication of the hyperelliptic curve cryptography is expedited. Furthermore, since the standard divisor is adopted as a base point, an existing high-speed scalar multiplication technique using the standard divisor may also be used in an environment where no memory limitation is imposed on the encryption processing apparatus, and more flexibility is thus assured.

[4. Structure of the encryption processing apparatus]

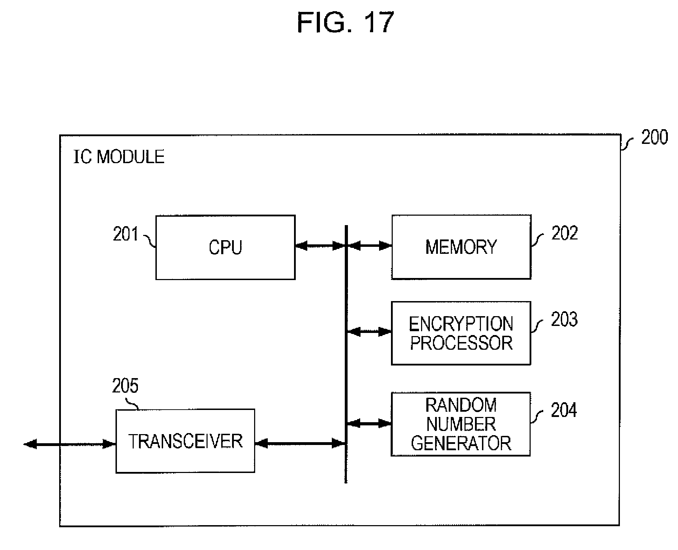

Finally, Fig. 17 illustrates a structure of an IC module 200 as a device executing the above-described encryption process. The above-described process may be performed by a PC, an IC card, a reader/writer, and any of a variety of other information processing apparatuses, and the IC module 200 of Fig. 17 may be implemented into any of these apparatuses.

A CPU (Central processing Unit) 201 of Fig. 17 is a process performing the starting and ending of the encryption process, data transmission and reception control, data transfer control between elements, and a variety of other programs. A memory 202 includes a ROM (Read-Only-Memory) storing a program to be executed by the CPU 201 and fixed data as a calculation parameter, and a RAM (Random Access Memory) storing a program executed in the process of the CPU 201, and a parameter changing as necessary in response the execution of the program, and used as a work area, etc.

Furthermore, calculation execution programs to be stored on the memory 202 includes a program for the setting process of the above-described base point, and the execution sequence of the addition and the doubling calculation of the scalar multiplication. Furthermore, the memory 202 may serve as a storage area for key data, etc. required for the encryption process. For example, the memory 202 may be used as a storage area for the public key data divisible into the theta divisors. The storage area of the data and the like is preferably arranged as a tamper-resistant memory.

An encryption section 203 performs the encryption process including the above-described scalar multiplication, the decryption process, etc. Here, encryption processing means is shown as a separate module, but instead of the separate encryption processing module, an encryption processing program may be stored onto the ROM, and the CPU 201 may reads and executes the ROM-stored program.

A random number generator 204 performs a generation process of a random number required in the generation of a key required in the encryption process.

A transceiver 205 is a data communication processor performing data communications with the outside, and for example, and performs data communications with an IC module such as a reader/writer, thereby outputting an encrypted text generated in the ID module, or inputting data from an external device such as the reader/writer.

The present invention has been described with reference to particular embodiments. However, it is obvious to those skilled in the art that modifications and changes can be made on the embodiments without departing from the scope of the present invention. In other words, the embodiments of the present invention are disclosed for exemplary purposes only and should not be interpreted in a limited way. The scope of the present invention is limited only by the appended claims.

A series of methods described in the specification may be performed using hardware, software, or a combination of both. If the methods are performed using software, a program containing the method steps may be installed onto a memory in a computer contained in dedicated hardware or a general-purpose computer that performs a variety of processes.

For example, the program may be pre-stored on a recording medium such as a hard disk or a ROM (Read Only Memory). Alternatively, the program may be temporarily or permanently stored (recorded) on a removable recording medium such as a flexible disk, a CD-ROM (Compact Disc Read Only Memory), an MO (Magneto optical) disc, a DVD (Digital Versatile Disc), a magnetic disc, and a semiconductor memory.

Also, the program may be installed from the above-described removable recording medium to the computer, transmitted from a download site to the computer in a wireless fashion, transferred to the computer via a network such as a LAN (Local Area Network) and the Internet in a wired fashion, and the computer receives such a transmitted program and installs the program onto the recording medium such as an internal hard disc.

The above-described methods described in the specification may be performed not only in a time-series order described above but also in parallel or separately depending on the throughput of each apparatus performing the process. In this specification, the term system refers to a logical set of a plurality of apparatuses and elements of each apparatus are not necessarily housed in a single casing.

Industrial Applicability

In accordance with the structure of the present invention, the target divisor of the scalar multiplication is controlled in the scalar multiplication to the divisor D of hyperelliptic curve cryptography and high-speed scalar multiplication is thus performed. More specifically, if the standard divisor having the weight equal to the genus g is the target divisor of the scalar multiplication, a determination as to whether the standard divisor is divisible into the theta divisor defined as a divisor having a weight less than the genus g is performed, and if the standard divisor is divisible, the theta divisor is generated by dividing the standard divisor, the scalar multiplication executing block performs the scalar multiplication using the theta divisor, a high-speed scalar multiplication is performed with a calculation amount reduced and a high-speed encryption process operation is thus performed.

**Claims**

1. An encryption processing apparatus for performing an encryption process based on hyperelliptic curve cryptography, comprising:

   a divisor control block for executing a control process on a divisor that is a target of scalar multiplication, and a scalar multiplication executing block for executing a scalar multiplication process using a divisor determined under the control of the divisor control block,

   wherein if a standard divisor having a weight equal to a genus g is the target divisor of the scalar multiplication process in the hyperelliptic curve cryptography of the genus g, the divisor control block determines whether the standard divisor is divisible into a theta divisor defined as having a weight less than the genus g, and, if the standard divisor is divisible, executes the control process to cause the scalar multiplication executing block to perform the scalar multiplication process using the theta divisor generated by dividing the standard divisor.

2. The encryption processing apparatus according to claim 1, wherein the divisor control block functions as a base point generator and performs a process to generate as a base point a standard divisor divisible into the theta divisors, wherein the scalar multiplication executing block performs the scalar multiplication process using the theta divisor set by dividing the standard divisor as the base point.

3. The encryption processing apparatus according to claim 1, wherein the divisor control block determines whether a random divisor input as a target of the scalar multiplication process is divisible into the data targets, and performs the control process to cause the scalar multiplication executing block to perform the scalar multiplication process using the theta divisor generated through dividing the standard divisor if the random divisor is divisible, and to cause the scalar multiplication executing block to perform the scalar multiplication process using the standard divisor if the random divisor is indivisible.

4. The encryption processing apparatus according to claim 1, wherein the divisor control block determines whether a random divisor input as a target of the scalar multiplication process is divisible into the data targets, if the input divisor is indivisible, repeats a doubling calculation process on the input divisor and a divisibility determination process of determining whether the doubling calculation result divisor is divisible into the theta divisors, and performs the control process to cause the scalar multiplication executing block to perform the scalar multiplication process using the theta divisor generated by dividing the doubling calculation result divisor if the doubling calculation result divisor divisible into the theta divisors is detected.

5. The encryption processing apparatus according to claim 4, wherein the scalar multiplication executing block repeats a halving calculation by the number of times equal to the number of times of doubling calculations after performing the scalar multiplication process using the theta divisor set by dividing the doubling calculation result divisor, in order to calculate the scalar multiplication of the input divisor.

6. The encryption processing apparatus according to claim 1, wherein the divisor control block, functioning as a key generator, performs a generation process of generating, as key data, the standard divisor divisible into the theta divisor, and stores the generated key data onto a memory, and wherein the scalar multiplication executing block performs the scalar multiplication process using the theta divisor set by dividing the standard divisor as the key data.

7. The encryption processing apparatus according to claim 6, wherein the divisor control block stores onto the memory the theta divisor set by dividing the key data as the standard divisor.

8. The encryption processing apparatus according to claim 1, wherein the scalar multiplication executing block performs in the hyperelliptic curve cryptography of genus 2 a transform process of a scalar multiplication kD of a standard divisor D represented by $kD=kP_1+kP_2$ using two theta divisors $P_1$ and $P_2$, in order to perform the scalar multiplication process with the theta divisors $P_1$ and $P_2$ applied using a simultaneous calculation operation.

9. The encryption processing apparatus according to claim 1, wherein the scalar multiplication executing block performs in the hyperelliptic curve cryptography of genus 2 a transform process of a scalar multiplication kD of a standard divisor D represented by $kD=k_1P_1+k_2P_2-(k_1-k)P_1-(k_2-k)P_2$ with $k_1$ and $k_2$ being odd integer and even integers, using two theta divisors $P_1$ and $P_2$, in order to perform the scalar multiplication process with the theta divisors $P_1$ and $P_2$

applied using a simultaneous calculation operation.

10. The encryption processing apparatus according to claim 1, wherein the scalar multiplication executing block performs in the hyperelliptic curve cryptography of genus 2 a transform process of a scalar multiplication kD of a standard divisor D represented by $kP_1+(k+1)P_2-P_2$ or $kP_1+(k-1)P_2+P_2$ using two theta divisors $P_1$ and $P_2$, in order to perform the scalar multiplication process with the theta divisors $P_1$ and $P_2$ applied.

11. The encryption processing apparatus according to claim 1, wherein the scalar multiplication executing block performs in the hyperelliptic curve cryptography of genus 3 a transform process of a scalar multiplication kD of a standard divisor D represented by $kP_1+(k+1)P_2-P_2$ or $kP_1+(k-1)P_2+P_2$ using two theta divisors $P_1$ and $P_2$, in order to perform the scalar multiplication process with the theta divisors $P_1$ and $P_2$ applied using a simultaneous calculation operation.

12. The encryption processing apparatus according to claim 1, wherein the scalar multiplication executing block performs in the hyperelliptic curve cryptography of genus 4 a transform process of a scalar multiplication kD of a standard divisor D represented by $kP_1+(k+1)P_2-P_2$ or $kP_1+(k-1)P_2+P_2$ using two theta divisors $P_1$ and $P_2$, in order to perform the scalar multiplication process with the theta divisors $P_1$ and $P_2$ applied using a simultaneous calculation operation.

13. The encryption processing apparatus according to claim 1, wherein the scalar multiplication executing block performs in the hyperelliptic curve cryptography of genus g the scalar multiplication process with the standard divisor divided into three theta divisors using a simultaneous calculation operation.

14. The encryption processing apparatus according to claim 1, wherein in the hyperelliptic curve cryptography of genus 3, the scalar multiplication executing block divides a scalar multiplication kD of a standard divisor D into $kP_1+(k+1)P_2-P_2$ or $kP_1+(k-1)P_2+P_2$ or $kP_3$ using three theta divisors $P_1$, $P_2$, and $P_3$ of weight 1, in order to perform the scalar multiplication process with the theta divisors $P_1$, $P_2$, and $P_3$ applied using a simultaneous calculation operation and a double-and-add-always calculation operation.

15. The encryption processing apparatus according to claim 1, wherein the scalar multiplication executing block performs the scalar multiplication process using a simultaneous calculation operation by dividing the standard divisor into at least two theta divisors in the hyperelliptic curve cryptography of genus g.

16. An encryption processing method of an encryption processing apparatus for performing an encryption process based on hyperelliptic curve cryptography, comprising:

> a divisor control step of a divisor control block for executing a control process on a divisor that is a target of scalar multiplication, and
> a scalar multiplication step of a scalar multiplication executing block for executing a scalar multiplication process using a divisor determined under the control of the divisor control block,

wherein the divisor control step includes determining whether the standard divisor is divisible into a theta divisor defined as having a weight less than the genus g if a standard divisor having a weight equal to a genus g in the hyperelliptic curve cryptography of the genus g is a target divisor of the scalar multiplication process, and executing the control process to cause the scalar multiplication executing block to perform the scalar multiplication process using the theta divisor generated by dividing the standard divisor if the standard divisor is divisible.

17. The encryption processing method according to claim 16, wherein the divisor control step comprises performing a base point generation process to generate as a base point the standard divisor divisible into the theta divisors, wherein the scalar multiplication step comprises performing the scalar multiplication process using the theta divisor set by dividing the standard divisor as the base point.

18. The encryption processing method according to claim 16, wherein the divisor control step comprises determining whether a random divisor input as a target of the scalar multiplication process is divisible into the data targets, and performing the control process to cause the scalar multiplication executing block to perform the scalar multiplication process using the theta divisor generated through dividing the standard divisor if the random divisor is divisible, and to cause the scalar multiplication executing block to perform the scalar multiplication process using the standard divisor if the random divisor is indivisible.

19. The encryption processing method according to claim 16, wherein the divisor control step comprises determining whether a random divisor input as a target of the scalar multiplication process is divisible into the data targets, if the input divisor is indivisible, repeating a doubling calculation process on the input divisor and a divisibility determination process of determining whether the doubling calculation result divisor is divisible into the theta divisors, and performing the control process to cause the scalar multiplication executing block to perform the scalar multiplication process using the theta divisor generated by dividing the doubling calculation result divisor if the doubling calculation result divisor divisible into the theta divisors is detected.

20. The encryption processing method according to claim 19, wherein the scalar multiplication step comprises repeating a halving calculation by the number of times equal to the number of times of doubling calculations after performing the scalar multiplication process using the theta divisor set by dividing the doubling calculation result divisor, in order to calculate the scalar multiplication of the input divisor.

21. The encryption processing method according to claim 16, wherein the divisor control step comprises performing a generation process of generating, as key data, the standard divisor divisible into the theta divisor, and storing the generated key data onto a memory, and
wherein the scalar multiplication step comprises performing the scalar multiplication process using the theta divisor set by dividing the standard divisor as the key data.

22. The encryption processing method according to claim 21, wherein the divisor control step comprises storing onto the memory the theta divisor set by dividing the key data as the standard divisor.

23. The encryption processing method according to claim 16, wherein the scalar multiplication step comprises performing in the hyperelliptic curve cryptography of genus 2 a transform process of a scalar multiplication $kD$ of a standard divisor $D$ represented by $kD = kP_1 + kP_2$ using two theta divisors $P_1$ and $P_2$, in order to perform the scalar multiplication process with the theta divisors $P_1$ and $P_2$ applied using a simultaneous calculation operation.

24. The encryption processing method according to claim 16, wherein the scalar multiplication step comprises performing in the hyperelliptic curve cryptography of genus 2 a transform process of a scalar multiplication $kD$ of a standard divisor $D$ represented by $kD = k_1 P_1 + k_2 P_2 - (k_1 - k)P_1 - (k_2 - k)P_2$ with $k_1$ and $k_2$ being odd integer and even integers, using two theta divisors $P_1$ and $P_2$, in order to perform the scalar multiplication process with the theta divisors $P_1$ and $P_2$ applied using a simultaneous calculation operation.

25. The encryption processing method according to claim 16, wherein the scalar multiplication step comprises performing in the hyperelliptic curve cryptography of genus 2 a transform process of a scalar multiplication $kD$ of a standard divisor $D$ represented by $kP_1 + (k+1)P_2 - P_2$ or $kP_1 + (k-1)P_2 + P_2$ using two theta divisors $P_1$ and $P_2$, in order to perform the scalar multiplication process with the theta divisors $P_1$ and $P_2$ applied.

26. The encryption processing method according to claim 16, wherein the scalar multiplication step comprises performing in the hyperelliptic curve cryptography of genus 3 a transform process of a scalar multiplication $kD$ of a standard divisor $D$ represented by $kP_1 + (k+1)P_2 - P_2$ or $kP_1 + (k-1)P_2 + P_2$ using two theta divisors $P_1$ and $P_2$, in order to perform the scalar multiplication process with the theta divisors $P_1$ and $P_2$ applied using a simultaneous calculation operation.

27. The encryption processing method according to claim 16, wherein the scalar multiplication step comprises performing in the hyperelliptic curve cryptography of genus 4 a transform process of a scalar multiplication $kD$ of a standard divisor $D$ represented by $kP_1 + (k+1)P_2 - P_2$ or $kP_1 + (k-1)P_2 + P_2$ using two theta divisors $P_1$ and $P_2$, in order to perform the simultaneous scalar multiplication process with the theta divisors $P_1$ and $P_2$ applied using a simultaneous calculation operation.

28. The encryption processing method according to claim 16, wherein the scalar multiplication step comprises performing in the hyperelliptic curve cryptography of genus $g$ the simultaneous scalar multiplication process with the standard divisor divided into three theta divisors using a simultaneous calculation operation.

29. The encryption processing method according to claim 16, wherein in the hyperelliptic curve cryptography of genus 3, the scalar multiplication step comprises dividing a scalar multiplication $kD$ of a standard divisor $D$ into $kP_1 + (k+1)P_2 - P_2$ or $kP_1 + (k-1)P_2 + P_2$ or $kP_3$ with three theta divisors $P_1$, $P_2$, and $P_3$ of weight 1 applied, in order to perform the scalar multiplication process with the theta divisors $P_1$, $P_2$, and $P_3$ applied using a simultaneous calculation operation and a double-and-add-always calculation operation.

**30.** The encryption processing method according to claim 16, wherein the scalar multiplication step comprises performing the scalar multiplication process using a simultaneous calculation operation by dividing the standard divisor into at least two theta divisors in the hyperelliptic curve cryptography of genus g.

**31.** A computer program of an encryption processing apparatus for performing an encryption process based on hyperelliptic curve cryptography, comprising:

a divisor control step of a divisor control block for executing a control process on a divisor that is a target of scalar multiplication, and
a scalar multiplication step of a scalar multiplication executing block for executing a scalar multiplication process using a divisor determined under the control of the divisor control block,

wherein the divisor control step includes determining whether the standard divisor is divisible into a theta divisor defined as having a weight less than the genus g if a standard divisor having a weight equal to a genus g in the hyperelliptic curve cryptography of the genus g is a target divisor of the scalar multiplication process, and executing the control process to cause the scalar multiplication executing block to perform the scalar multiplication process using the theta divisor generated by dividing the standard divisor if the standard divisor is divisible.

# FIG. 1

START

S11

GENERATE THETA
DIVISOR D

S12

SCALAR MULTIPLICATION BINARY
METHOD WITH GENERATED THETA
DIVISOR APPLIED OR DOUBLE-
AND-ADD-ALWAYS METHOD

END

# FIG. 2

EP 1 975 907 A1

ENCRYPTION PROCESSING SECTION 100

**DIVISOR CONTROL BLOCK** 101

EXPRESS STANDARD DIVISOR D WITH THETA DIVISORS
$D = P_1 + P_2 + ...$

**SCALAR MULTIPLICATION EXECUTING BLOCK** 102

EXECUTE SCALAR MULTIPLICATION
$k(P_1 + P_2 + ... + P_i)$

## FIG. 3

STANDARD DIVISOR IS
DIVISIBLE INTO THETA DIVISORS
IF U OF DIVISOR D = (U,V) HAS
SOLUTION ON FINITE FIELD Fg

THETA DIVISOR
$D = P_1 + P_2 + ... + P_i$

STANDARD DIVISOR
$D = (U,V)$

SUM THETA DIVISORS IN
ORDER TO GENERATE
STANDARD DIVISOR

EP 1 975 907 A1

# FIG. 4

EP 1 975 907 A1

36

# FIG. 5

START

SELECT POINT ON RANDOM C — S101

GENERATE A PLURALITY OF THETA DIVISORS OF WEIGHT i — S102

$D = P_1 + P_2 + ... + P_g$ — S103

ORDER OF DIVISOR D BEING r AND WEIGHT BEING g? — S104

NO → (loop back to S101)

YES

GENERATE STANDARD DIVISOR D AS BASE POINT — S105

END

# FIG. 6

ENCRYPTION PROCESSING SECTION — 120

DIVISOR CONTROL BLOCK
(STANDARD DIVISOR DIVISION
DETERMINATION UNIT) — 121

EXPRESS STANDARD
DIVISOR D WITH
THETA DIVISORS
$D = P_1 + P_2 + \ldots$

SCALAR MULTIPLICATION
EXECUTING BLOCK — 122

EXECUTE SCALAR
MULTIPLICATION
$k(P_1 + P_2 + \ldots + P_i)$

kD

k

EP 1 975 907 A1

# FIG. 7

START

S201
INPUT : D = (U,V)

S202
U BEING DIVISIBLE? —NO→

YES

S204
PERFORM CONTROL PROCESS TO PERFORM SCALAR MULTIPLICATION USING DIVIDED THETA DIVISORS

S203
EXCEPTION PROCESS : PERFORM CONTROL PROCESS TO PERFORM SCALAR MULTIPLICATION USING STANDARD DIVISOR

END

# FIG. 8

START

INPUT : D = (U,V), i = 0,imax — S221

S222 — U BEING DIVISIBLE?

NO → D = 2D, i = i + 1 — S231

S232 — i = imax

NO

YES → EXCEPTION PROCESS : PERFORM CONTROL PROCESS TO EXECUTE SCALAR MULTIPLICATION USING STANDARD DIVISOR — S233

YES → $D = P_1 + P_2$ — S223

PERFORM SCALAR MULTIPLICATION $K(P_1 + P_2)$ — S224

S225 — i = 0

NO → $D = (1/2)D, i = i - 1$ — S234

YES — S226

OUTPUT : dD = (U,V)

END

EP 1 975 907 A1

# FIG. 9

**130**

ENCRYPTION PROCESSING SECTION

**131**

DIVISOR CONTROL BLOCK
(KEY GENERATOR)

EXPRESS STANDARD
DIVISOR D WITH
THETA DIVISORS
$D = P_1 + P_2 + ...$

**132**

SCALAR MULTIPLICATION
EXECUTING BLOCK

EXECUTE SCALAR
MULTIPLICATION
$k(P_1 + P_2 + ... + P_i)$

kW'

**133**

MEMORY
PUBLIC KEY $W = P_1 + P_2 + ...$

k

ANY PUBLIC KEY W'

# FIG. 10

START

S251
GENERATE RANDOM NUMBER s∈Γ

S252
GENERATE PUBLIC KEY W  W = sG

S253
W BEING DIVISIBLE INTO THETA DIVISORS?  — NO

YES  S254
DIVIDE

S255
OUTPUT : STORE PUBLIC KEY W AS SET OF THETA DIVISORS

END

EP 1 975 907 A1

## FIG. 11

A

- S301 GENERATE RANDOM NUMBER a∈r
- S302 GENERATE KEY AND CALCULATE $W_A$ = aG
- S307 CALCULATE Z = a$W_B$ AND SET RESULTS AS COMMON SECRET INFORMATION

PUBLIC INFORMATION:
HYPERELLIPTIC CURVE C,
BASE POINT G
ORDER OF BASE POINT r

- S303 TRANSMIT $W_A$ = aG TO B
- S306 TRANSMIT $W_B$ = bG TO A

B

- S304 GENERATE b∈r
- S305 GENERATE KEY AND CALCULATE $W_B$ = bG
- S308 CALCULATE Z = b$W_A$ AND SET RESULTS AS COMMON SECRET INFORMATION

# FIG. 12

A

**S35a** — GENERATE PUBLIC KEY $W_A = P_1 + P_2$ (PRE-GENERATED)

**S351** — RETRIEVE PUBLIC KEY $W_A = P_1 + P_2$ FROM MEMORY

**S355** — CALCULATE $Z = aW_B$ AND SET RESULTS AS COMMON SECRET INFORMATION

PUBLIC INFORMATION : HYPERELLIPTIC CURVE C, BASE POINT G ORDER OF BASE POINT r

**S352** — TRANSMIT PUBLIC KEY $W_A = P_1 + P_2$ TO B

**S354** — TRANSMIT PUBLIC KEY $W_B = Q_1 + Q_2$ TO A

B

**S35b** — GENERATE PUBLIC KEY $W_B = Q_1 + Q_2$ (PRE-GENERATED)

**S353** — RETRIEVE PUBLIC KEY $W_B = Q_1 + Q_2$ FROM MEMORY

**S356** — CALCULATE $Z = bW_A$ AND SET RESULTS AS COMMON SECRET INFORMATION

EP 1 975 907 A1

## FIG. 13

```
         ┌─────────┐
         │  START  │
         └────┬────┘
              │
              ▼                              S501
┌──────────────────────────────────┐
│ INPUT : SCALAR VALUE k            │
│         THETA DIVISOR P₁ AND P₂   │
└─────────────┬────────────────────┘
              │
              ▼           S502              ┌────────────────────────┐  S504
          ╱─────────╲           YES         │ SCALAR MULTIPLICATION  │
         ╱ SPA ROBUSTNESS ╲ ──────────────▶ │ kP₁ + kP₂ ALGORITHM 7  │
         ╲ REQUIRED?      ╱                  └───────────┬────────────┘
          ╲─────────╱                                    │
              │ NO       S503                             │
              ▼                                           │
┌──────────────────────────┐                             │
│ SCALAR MULTIPLICATION    │                             │
│ kP₁ + kP₂ ALGORITHM 6    │                             │
└────────────┬─────────────┘                             │
             │              S505                          │
             ▼                                            │
┌──────────────────────────┐                             │
│ OUTPUT : kD = kP₁ + kP₂  │ ◀───────────────────────────┘
└────────────┬─────────────┘
             │
             ▼
        ┌─────────┐
        │   END   │
        └─────────┘
```

EP 1 975 907 A1

FIG. 14

START

S601 INPUT : SCALAR VALUE k
THETA DIVISORS $P_1$ AND $P_2$

S602 $kP_1 + kP_2$
$= k_1 P_1 + k_2 P_2 - (k_1 - k)P_1 - (k_2 - k)P_2$

S603 EXPAND $k_1$ AND $k_2$ INTO SIGNED
BINARY REPRESENTATION

S604 SCALAR MULTIPLICATION
$D' = k_1 P_1 + k_2 P_2$

S605 $D' - (k_1 - k)P_1 - (k_2 - k)P_2$

S606 OUTPUT : $kD = kP_1 + kP_2$

END

# FIG. 15

START

INPUT : SCALAR VALUE k
THETA DIVISORS $P_1$ AND $P_2$ — S621

$kP_1 + kP_2$
$= kP_1 + (k + 1)P_2 - P_2$ — S622

EXPAND k AND k + 1 INTO SIGNED
BINARY REPRESENTATION — S623

SCALAR MULTIPLICATION
$D' = kP_1 + (k + 1)P_2$ ALGORITHM 8 — S624

$D' - P_2$ — S625

OUTPUT : $kD = kP_1 + kP_2$ — S626

END

EP 1 975 907 A1

# FIG. 16

```
         ┌─────────┐
         │  START  │
         └────┬────┘
              │                         S651
              ▼
    ┌──────────────────────────┐
    │  EXPAND k INTO BINARY     │
    │  REPRESENTATION           │
    └────────────┬─────────────┘
                 │                                              S652
                 ▼
  ┌────────────────────────────────────────────────────────────────┐
  │   k→k+1 CONVERSION PROCESS                                       │
  │                                                                  │
  │   1. BIT INVERT k                                                │
  │   2. INVERT 1 INTO -1 AND SET 1 TO THE MOST SIGNIFICANT BIT      │
  └────────────────────────────┬───────────────────────────────────┘
                               │                    S653
                               ▼
                    ┌──────────────────────────┐
                    │  EXPAND k + 1 INTO SIGNED │
                    │  BINARY REPRESENTATION    │
                    └────────────┬─────────────┘
                                 │
                                 ▼
                            ┌─────────┐
                            │   END   │
                            └─────────┘
```

EP 1 975 907 A1

# FIG. 17

IC MODULE 200

201 CPU

202 MEMORY

203 ENCRYPTION PROCESSOR

204 RANDOM NUMBER GENERATOR

205 TRANSCEIVER

EP 1 975 907 A1

---

**EP 1 975 907 A1**

| INTERNATIONAL SEARCH REPORT | International application No. |
|---|---|
| | PCT/JP2007/050008 |

**A. CLASSIFICATION OF SUBJECT MATTER**
*G09C1/00*(2006.01)i, *H04L9/30*(2006.01)i

According to International Patent Classification (IPC) or to both national classification and IPC

**B. FIELDS SEARCHED**

Minimum documentation searched (classification system followed by classification symbols)
G09C1/00, H04L9/30

Documentation searched other than minimum documentation to the extent that such documents are included in the fields searched
Jitsuyo Shinan Koho          1922-1996     Jitsuyo Shinan Toroku Koho     1996-2007
Kokai Jitsuyo Shinan Koho     1971-2007     Toroku Jitsuyo Shinan Koho     1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-258228 A (Sony Corp.), 22 September, 2005 (22.09.05), All pages & US 2005/0201553 A1     & EP 1578054 A1 | 1-31 |
| A | Novel Efficient Implementation of Hyperelliptic Curve Cryptosystems using Degenerate Divisors, Lecture Notes in Computer Science, Vol.3325, p.345-359, 2004 especially 4 Degenerate Divisors of HECC | 1-31 |
| A | Some Improved Algorithms for Hyperelliptic Curve Cryptosystems Using Degenerate Divisors, Lecture Notes in Computer Science, Vol.3506, p.296-312, 2005 especially 3 Proposed Algotithms for Genus 3 HECC, 4 Application of Window Method | 1-31 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 April, 2007 (18.04.07) | 01 May, 2007 (01.05.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

50

**INTERNATIONAL SEARCH REPORT**

International application No.

PCT/JP2007/050008

C (Continuation). DOCUMENTS CONSIDERED TO BE RELEVANT

| Category* | Citation of document, with indication, where appropriate, of the relevant passages | Relevant to claim No. |
|---|---|---|
| A | Efficient Hyperelliptic Curve Cryptosystems Using Theta Divisors, IEICE Transactions on Fundamentals of Electronics, Communications and Computer Science, Vol.E89-A No.1, p.151-160, 2006.01.01 especially 5. Efficient Scalar Multiplication Using Theta Divisors | 1-31 |
| A | A Complete Divisor Class Halving Algorithm for Hyperelliptic Curve Cryptosystems of Genus Two, Lecture Notes in Computer Science, Vol.3574, p.146-157, 2005 especially 3 Proposed Halving Algorithm for General Curve, 4 Complete Procedures for Divisor Class Halving Algorithm | 5,20 |
| P,X | SPA-Resistant Scalar Multiplication on Hyperelliptic Curve Cryptosystems Combining Divisor Decomposition Technique and Joint Regular Form, Lecture Notes in Computer Science, Vol.4249, p.148-159, 2006.10, all pages | 1-31 |
| E,A | JP 2006-145945 A (Sony Corp.), 08 June, 2006 (08.06.06), All pages & WO 2006/054559 A1 | 1-31 |
| E,A | JP 2006-227562 A (Sony Corp.), 31 August, 2006 (31.08.06), All pages & WO 2006/035732 A1 | 5,20 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005258228 A

### Non-patent literature cited in the description

- **N. KOBLITZ.** Hyperelliptic curve cryptosystems. *J. Cryptology,* 1989, vol. 1 (3), 139-150
- **D.G. CANTOR.** Computing in the Jacobian of hyperelliptic curve. *Math. Comp.,* 1987, vol. 48 (177), 95-101
- **H. COHEN ; G. FREY.** Handbook of Elliptic and Hyperelliptic Curve Cryptography. Chapman & Hall/CRC, 2005
- Improving group law algorithms for Jacobians of hyperelliptic curves. **N. NAGAO.** ANTS-IV, LNCS. Springer-Verlag, 2000, vol. 1838, 439-448
- Elliptic Scalar Multiplication Using Point Halving. **E. KNUDSEN.** ASIAC RYPTO 99, LNCS. Springer-Verlag, 1999, vol. 1716, 135-149
- Novel Efficient Implementations of Hyperelliptic Curve Cryptosystems Using Degenerate Divisors. **M. KATAGI ; I. KITAMURA ; T. AKISHITA ; T. TAKAGI.** WISA 2004, LNCS. Springer-Verlag, 2004, vol. 3325, 345-359
- **M. KATAGI ; T.AKISHITA ; I.KITAMURA ; T. TAKAGI.** Some Improved Algorithms for Hyperelliptic Curve Cryptosystems Using Degenerate Divisors. *ICISC 2044, LNCS,* 2004, vol. 3506, 296-312
- **I. KITAMURA ; M. KATAGI ; T. TAKAGI.** A Complete Divisor Class Halving Algorithm for Hyperelliptic Curve Cryptosystems of Genus Two. *ACISP 2005, LNCS,* 2005, vol. 3574, 146-157
- **C. KOCHER.** Timing Attacks on Implementations of Diffie-Hellman, RSA, DSS, and Other Systems. *CRYPTO 96, LNCS,* 1996, vol. 1109, 104-113
- Differential Power Analysis. **C. KOCHER ; J. JAFFE ; B. JUN.** CRYPTO 99, LNCS. Springer-Verlag, 1999, vol. 1666, 388-397
- Resistance against Differential Power Analysis for Elliptic Curve Cryptosystems. **J.-S. CORON.** CHES '99, LNCS. Springer-Verlag, 1999, vol. 1717, 292-302
- Software Implementation of Elliptic Curve Cryptography over Binary Fields. **D. HANKERSON ; J.L. HERNADEZ ; A. MENEZES.** CHES 2000, LNCS. Springer-Verlag, 2000, vol. 1965, 1-24
- Resistance against Differential Power Analysis for Elliptic Curve Cryptosystems. **J.-S. CORON.** CHES' 99, LNCS. Springer-Verlag, 1999, vol. 1717, 292-302